(19) Europäisches Patentamt
European Patent Office
Office européen des brevets

(11) **EP 4 550 679 A1**

(12) **EUROPEAN PATENT APPLICATION**
published in accordance with Art. 153(4) EPC

(43) Date of publication:
**07.05.2025 Bulletin 2025/19**

(21) Application number: **22948324.3**

(22) Date of filing: **28.06.2022**

(51) International Patent Classification (IPC):
***H04B 7/02*** *(2018.01)*

(52) Cooperative Patent Classification (CPC):
**H04B 7/02**

(86) International application number:
**PCT/CN2022/102074**

(87) International publication number:
**WO 2024/000204 (04.01.2024 Gazette 2024/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **ZHANG, Zhenyu**
  **Beijing 100085 (CN)**
• **GAO, Xueyuan**
  **Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **METHOD FOR DETERMINING UPLINK MIMO TRANSMISSION CODEWORD AND APPARATUS THEREFOR**

(57) Disclosed in the embodiments of the present application are a method for determining an uplink MIMO transmission codeword and an apparatus therefor, which can be applied to a communication system. The method comprises: determining 4Tx and/or 2Tx candidate codewords for uplink MIMO transmission, wherein the candidate codewords comprise at least one of a first candidate codeword for antenna full-coherent transmission, a second candidate codeword for antenna partial-coherent transmission and a third candidate codeword for antenna non-coherent transmission;, and on the basis of the candidate codewords, determining a first codeword for antenna partial-coherent transmission and/or a second codeword for non-coherent transmission for 8Tx L-layer uplink MIMO transmission, In the embodiments of the present application, a high-dimensional 8Tx antenna partial-coherent transmission codeword or non-coherent transmission codeword can be constructed on the basis of a low-dimensional transmission codeword, such that uplink MIMO supports the requirements for 8Tx 1-layer to 8-layer transmission, thereby further enhancing an uplink MIMO technique.

EP 4 550 679 A1

determining a candidate codeword of 4 transmit antenna ports (Tx) and/or 2 Tx for uplink MIMO transmission — 201

determining, based on the candidate codeword, a first codeword for the antenna partial coherence transmission and/or a second codeword for the antenna non-coherence transmission of 8 Tx L-layer for the uplink MIMO transmission — 202

FIG. 2

## Description

### TECHNICAL FIELD

The disclosure relates to the field of communication technologies, in particular to a method and an apparatus for determining an uplink multiple input multiple output (MIMO) transmission codeword.

### BACKGROUND

In a multiple input multiple output (MIMO) system, a precoding technology can effectively reduce interference and system overhead, improve system capacity, which is an extremely important key technology in the MIMO system. In the MIMO system based on codebook transmission, the codebook design is also an important part of the precoding technology. In the existing uplink MIMO transmission, a maximum number of antenna ports supported by a codeword for antenna partial coherence transmission is 4. That is, the existing codeword for the antenna partial coherence transmission only supports up to 4 transmit antenna ports (Tx) and up to four layers for transmission. When enhancement is performed on the transmit antenna ports (Tx) for uplink MIMO transmission, for example, the transmit antenna ports are increased to 8 Tx, transmission requirements of the enhanced antenna ports cannot be satisfied.

### SUMMARY

Embodiments of the disclosure provide a method and an apparatus for determining an uplink multiple input multiple output (MIMO) transmission codeword. By constructing a codeword for antenna partial coherence transmission or a codeword for antenna non-coherence transmission in a high dimension of 8 transmit antenna ports (Tx) based on a transmission codeword in a low dimension, the uplink MIMO is able to support transmission requirements of the 1st layer to the 8th layer of 8 Tx, thus further enhancing the uplink MIMO technology.

In a first aspect, an embodiment of the disclosure provides a method for determining an uplink MIMO transmission codeword. The method includes: determining a candidate codeword of 4 Tx and/or 2 Tx for uplink MIMO transmission, in which the candidate codeword includes at least one of a first candidate codeword for antenna full coherence transmission, a second candidate codeword for antenna partial coherence transmission, or a third candidate codeword for antenna non-coherence transmission; and determining, based on the candidate codeword, a first codeword for the antenna partial coherence transmission and/or a second codeword for the antenna non-coherence transmission of 8 Tx L-layer for the uplink MIMO transmission, in which L is less than or equal to 8.

In the embodiments of the disclosure, the first candidate codeword of 4 Tx and/or 2 Tx for the uplink MIMO transmission is determined, and the first codeword for the antenna partial coherence transmission and/or the second codeword for the antenna non-coherence transmission of 8 Tx L-layer may be determined based on the candidate codeword of 4 Tx and/or 2 Tx. In the embodiments of the disclosure, by constructing a codeword for the antenna partial coherence transmission or a codeword for the antenna non-coherence transmission in a high dimension of 8 Tx based on a transmission codeword in a low dimension, the uplink MIMO is able to support the transmission requirements of the 1st layer to the 8th layer of 8 Tx, thus further enhancing the uplink MIMO technology.

In a second aspect, an embodiment of the disclosure provides a communication apparatus. The communication apparatus has part or all of the functions of the terminal for implementing the method described in the first aspect. For example, the communication apparatus may have functions of some or all of the embodiments of the disclosure, or may have the functions for independently implementing any embodiment of the disclosure. The functions may be realized by hardware, or by the hardware executing corresponding software. The hardware or software includes one or more units or modules corresponding to the above functions.

In an implementation, a structure of the communication apparatus may include a transceiver module and a processing module. The processing module is configured to support the communication apparatus to perform the corresponding functions of the method described above. The transceiver module is configured to support communication between the communication apparatus and other devices. The communication apparatus may further include a storage module. The storage module is coupled with the transceiver module and the processing module, and configured to store necessary computer programs and data of the communication apparatus.

As an example, the processing module may be a processor, the transceiver module may be a transceiver or a communication interface, and the storage module may be a memory.

In an implementation, a structure of the communication apparatus may include a transceiver module and a processing module. The processing module is configured to support the communication apparatus to perform the corresponding functions of the method described above. The transceiver module is configured to support communication between the communication apparatus and other devices. The communication apparatus may further include a storage module. The storage module is coupled with the transceiver module and the processing module, and configured to store necessary computer programs and data of the communication apparatus.

In a third aspect, an embodiment of the disclosure provides a communication apparatus. The communication apparatus includes a processor. When the processor calls computer programs stored in a memory, the method described in the first aspect above is executed.

In a fourth aspect, an embodiment of the disclosure provides a communication apparatus. The communication apparatus includes: a processor and a memory for storing computer programs. When the processor is configured to execute the computer programs, the communication apparatus is caused to execute the method described in the first aspect above.

In a fifth aspect, an embodiment of the disclosure provides a communication apparatus. The communication apparatus includes: a processor and an interface circuit. The interface circuit is configured to receive code instructions and transmit the code instructions to the processor. When the processor is configured to run the code instructions, the communication apparatus is caused to execute the method described in the first aspect above.

In a sixth aspect, an embodiment of the disclosure provides a computer-readable storage medium, configured to store instructions employed by the terminal. When the instructions are executed, the terminal is caused to execute the method in the first aspect.

In a seventh aspect, the disclosure further provides a computer program product including computer programs. When the computer programs are executed by a computer, the computer is caused to execute the method in the first aspect.

In an eighth aspect, the disclosure provides a chip system. The chip system includes at least one processor and an interface, for supporting the terminal to realize the functions involved in the first aspect, e.g., determining or processing at least one of data and information involved in the method described above. In a possible design, the chip system further includes a memory. The memory is configured to store necessary computer programs and data of the terminal. The chip system may be composed of chips or may include chips and other discrete devices.

In a ninth aspect, the disclosure provides a computer program. When the computer program is executed by a computer, the computer is caused to execute the method in the first aspect.

## BRIEF DESCRIPTION OF THE DRAWINGS

In order to clearly illustrate a technical solution of embodiments of the disclosure or the related art, description is made below to accompanying drawings used in the embodiments of the disclosure or the related art.

FIG. 1 is a schematic diagram illustrating a communication system according to an embodiment of the disclosure.
FIG. 2 is a flow chart illustrating a method for determining an uplink multiple input multiple output (MIMO) transmission codeword according to an embodiment of the disclosure.
FIG. 3 is a schematic diagram illustrating an antennas arrangement according to an embodiment of the disclosure.
FIG. 4 is a flow chart illustrating another method for determining an uplink MIMO transmission codeword according to an embodiment of the disclosure.
FIG. 5 is a flow chart illustrating another method for determining an uplink MIMO transmission codeword according to an embodiment of the disclosure.
FIG. 6 is a flow chart illustrating another method for determining an uplink MIMO transmission codeword according to an embodiment of the disclosure.
FIG. 7 is a flow chart illustrating another method for determining an uplink MIMO transmission codeword according to an embodiment of the disclosure.
FIG. 8 is a flow chart illustrating another method for determining an uplink MIMO transmission codeword according to an embodiment of the disclosure.
FIG. 9 is a flow chart illustrating another method for determining an uplink MIMO transmission codeword according to an embodiment of the disclosure.
FIG. 10 is a flow chart illustrating another method for determining an uplink MIMO transmission codeword according to an embodiment of the disclosure.
FIG. 11 is a flow chart illustrating another method for determining an uplink MIMO transmission codeword according to an embodiment of the disclosure.
FIG. 12 is a flow chart illustrating an uplink transmission method according to an embodiment of the disclosure.
FIG. 13 is a flow chart illustrating another uplink transmission method according to an embodiment of the disclosure.
FIG. 14 is a block diagram illustrating a communication apparatus according to an embodiment of the disclosure.
FIG. 15 is a block diagram illustrating another communication apparatus according to another embodiment of the disclosure.
FIG. 16 is a block diagram illustrating a chip according to an embodiment of the disclosure.

## DETAILED DESCRIPTION

Reference will now be made in detail to the exemplary embodiments, examples of which are illustrated in the accompanying drawings. When the following description refers to the accompanying drawings, the same numerals in different drawings refer to the same or similar elements unless otherwise indicated. The implementations described in the following exemplary embodiments do not represent all implementations consistent with the embodiments of the disclosure. Rather, they are merely examples of devices and methods consistent with aspects of the embodiments of the application as recited in the appended claims.

Terms used in the embodiments of the disclosure are for the purpose of describing specific embodiments only, and are not intended to limit the embodiments of the disclosure. As used in the examples of this disclosure and the appended claims, the singular forms "a" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" as used herein may be interpreted as "in a case that" or "when" or "in response to a determination". For the purposes of brevity and ease of understanding, the terms "greater than" or "less than", "higher than" or "lower than" are used herein to characterize size relationships. For those skilled in the field, it is understood that the term "greater than" also covers the meaning of "greater than or equal to", the term "less than" also covers the meaning of "less than or equal to", the term "higher than" covers the meaning of "higher than or equal to", and the term "lower than" covers the meaning of "lower than equal to".

For ease of understanding, the terms involved in the disclosure are firstly introduced.

Physical uplink shared channel (PUSCH) is configured to carry data from the transmission channel PUSCH.

The coherence transmission is defined as a capability of a UE. The coherence transmission capability of the UE include the following capabilities.

Full coherence transmission: all antenna ports can be used for coherence transmission.

Partial coherence transmission: antenna ports in the same coherence transmission group can be used for coherence transmission, and antenna ports in different coherence transmission groups cannot be used for coherence transmission. Each coherence transmission group includes at least two antenna ports.

Non-coherence transmission: no antenna port can be used for coherence transmission.

A codeword for antenna partial coherence transmission applicable to a communication system is determined based on the method for determining the codeword for the antenna partial coherence transmission in the uplink multiple input multiple output (MIMO) transmission provided in the embodiments of the disclosure. Firstly, description is made below to the communication system to which the embodiments of the disclosure are applicable.

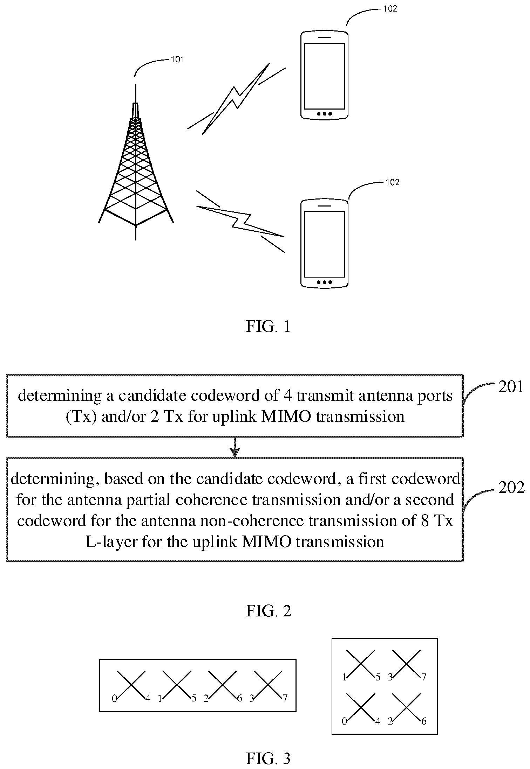

Referring to FIG. 1, FIG. 1 is a schematic diagram illustrating a communication system according to an embodiment of the disclosure. The communication system may include, but is not limited to, one network device and one terminal. The number and form of devices illustrated in FIG. 1 are only for examples and do not constitute a limitation on the embodiments of the disclosure, and two or more network devices and two or more terminals may be included in a practical application. The communication system illustrated in FIG. 1 includes one network device 101 and one terminal 102, for example.

It should be noted that an technical solution of the embodiments of the disclosure may be applied to various communication systems, such as a long term evolution (LTE) system, a fifth generation (5G) mobile communication system, a 5G new radio (NR) system, or other future new mobile communication systems. It should also be noted that the sidelink in the embodiments of the disclosure may also be referred to as a side link or a direct link.

The network device 101 in the embodiments of the disclosure is an entity at a network side for sending or receiving signals. For example, the network device 101 may be an evolved NodeB (eNB), a transmission reception point (TRP), a next generation NodeB (gNB) in an NR system, a base station in other future mobile communication systems or an access node in a wireless fidelity (WiFi) system, etc. The detailed technology and detailed device form employed by the network device are not limited in embodiments of the disclosure. The network device in embodiments of the disclosure may be combined by a central unit (CU) and a distributed unit (DU). The CU may also be referred to as a control unit. The CU-DU structure may be configured to split a protocol layer of the network device, such as a base station, in which, part of functions of the protocol layer are centrally controlled by the CU, while part or all of remaining functions of the protocol layer are distributed in the DU. The DU is controlled by the CU.

The terminal 102 in the embodiments of the disclosure is an entity at a user side for receiving or sending signals, such as a mobile phone. The terminal may also be referred to as a terminal, a user equipment (UE), a mobile station (MS), a mobile terminal (MT), and the like. The terminal may be an automobile with a communication function, a smart automobile, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. Detailed technologies and detailed device forms employed by the terminal are not limited in embodiments of the disclosure.

In a sidelink communication, there are four sidelink transmission modes. A sidelink transmission mode 1 and a sidelink transmission mode 2 are used for a device-to-device (D2D) communication. A sidelink transmission mode 3 and a sidelink transmission mode 4 are used for a V2X communication. When the sidelink transmission mode 3 is employed, resource allocation is scheduled by the network device 101. In particular, the network device 101 can send resource allocation information to the terminal 102, which then allocates resources to another terminal to enable the another terminal to send information to the network device 101 through the allocated resources. In the V2X communication, a terminal with a better signal or a higher reliability can be used as the terminal 102. In the embodiments of the disclosure, the first terminal can refer to the terminal 102, and the second terminal can refer to the another terminal.

It can be understood that the communication system described in this embodiment of the present disclosure is intended to describe the technical solutions in the embodiments of the present disclosure more clearly, rather than to constitute a limitation on the technical solutions provided in the embodiments of the present disclosure. It can be known by those of ordinary skill in the art that, with the evolution of a system architecture and the emergence of new service scenarios, the technical solutions provided in the embodiments of the present disclosure is equally applicable to similar technical problems.

It should be noted that in the present disclosure, a the method for determining an uplink MIMO transmission codeword provided in any embodiment can be executed alone, or can be executed together in combination with possible implementation methods in other embodiments, or can be executed together in combination with any technology solution in the related art.

Description is made in detail below to a method and an apparatus for determining an uplink MIMO transmission codeword according to the disclosure with reference to accompanying drawings.

Referring to FIG. 2, FIG. 2 is a flow chart illustrating a method for determining an uplink MIMO transmission codeword according to an embodiment of the disclosure. As shown in FIG. 2, the method may include, but is not limited to, the following steps.

At S201, a candidate codeword of 4 Tx and/or 2 Tx for uplink MIMO transmission is determined.

The candidate codeword includes at least one of a first candidate codeword for antenna full coherence transmission, a second candidate codeword for antenna partial coherence transmission, or a third candidate codeword for antenna non-coherence transmission.

With enhancement of transmission requirements and transmission scenarios, the uplink transmission can support an increased number of antenna ports and uplink transmission layers, i.e., the number of antenna ports can be increased from 4 Tx up to 8 Tx. Accordingly, the number of uplink transmission layers can be increased from 4 layers to L layers, e.g., the value of L can range from 1 to 8.

Optionally, the number of antenna ports for the uplink transmission and the number L of uplink transmission layers may or may not be equal.

The method for determining the candidate codeword of 4 Tx and 2 Tx is not limited in the disclosure, which may be determined according to actual situations.

Optionally, the first candidate codeword of 4 Tx may be a candidate codeword for the antenna full coherence transmission of 4 Tx determined based on a 4-dimensional orthogonal codebook, such as a Kerdock codebook. Optionally, the first candidate codeword of 2 Tx may be a candidate codeword for the antenna full coherence transmission of 2 Tx determined based on a 2-dimensional orthogonal codebook, such as a Kerdock codebook. It should be noted that the Kerdock codebook is an orthogonal codebook used in the design of communication systems and can be configured to construct mutually unbiased bases sequences. The Kerdock codebook has orthogonality, i.e., any two column vectors in each Kerdock codeword are mutually orthogonal. Optionally, a second candidate codeword and a third candidate codeword of 4 Tx may be determined based on the first candidate codeword of 4 Tx. Optionally, a second candidate codeword and a third candidate codeword of 2 Tx may be determined based on the first candidate codeword of 2 Tx.

Optionally, a precoding codebook of 4 Tx for the uplink MIIMO transmission as agreed in a 3rd generation partnership project (3GPP) communication protocol may be determined. The uplink precoding codebook includes the first candidate codeword for the antenna full coherence transmission of 4 Tx, the second candidate codeword for the antenna partial coherence transmission of 4 Tx, and the third candidate codeword for the antenna non-coherence transmission of 4 Tx. That is, the first candidate codeword, the second candidate codeword, and the third candidate codeword of 4 Tx are determined based on the uplink precoding codebook of 4 Tx.

Optionally, a precoding codebook of 4 Tx for the downlink MIIMO transmission as agreed in the 3GPP communication protocol may be determined. The downlink precoding codebook includes the first candidate codeword of 4 Tx. That is, the first candidate codeword of 4 Tx is determined based on the downlink precoding codebook of 4 Tx.

Similarly, a precoding codebook of 2 Tx for the uplink MIIMO transmission can be determined. The first candidate codeword of 2 Tx is determined based on the uplink precoding codebook of 2 Tx. Alternatively, a precoding codebook of 2 Tx for the downlink MIIMO transmission can be determined. The first candidate codeword of 2 Tx is determined based on the downlink precoding codebook of 2 Tx.

Optionally, the first candidate codeword, the second candidate codeword, and the third candidate codeword of 4 Tx and/or the first candidate codeword, the second candidate codeword, and the third candidate codeword of 2 Tx may be pre-configured.

At S202, a first codeword for the antenna partial coherence transmission and/or a second codeword for the antenna non-coherence transmission of 8 Tx L-layer for the uplink MIMO transmission is determined based on the candidate codeword.

L indicates the maximum number of transmission layers for the uplink MIMO transmission supported by the terminal, in which L is taken as a positive integer, and L is less than or equal to 8.

Since the partial coherence transmission involves that transmission layers corresponding to partial antenna ports are mutually orthogonal, it is necessary to group all the antenna ports to realize that data transmitted by partial layers is only mapped to one antenna port group. The 8 antenna ports can be divided into a plurality of antenna port groups, each group corresponds to only partial antenna ports and the layers corresponding to the antenna ports within the group are mutually orthogonal.

For example, 8 antenna ports are divided into 2 groups, each group includes 4 antenna ports, and corresponds to 4 uplink transmission layers. In this case, it is required that the 4 uplink transmission layers within each group are mutually orthogonal, but there is no need to enable the uplink transmission layers between different groups to be mutually orthogonal. That is, the data transmitted by some layers is only mapped to one antenna port group, and the data transmitted by other layers is only mapped to other antenna port groups. Each of partial transmission layer has a one-to-one correspondence with each antenna port group.

In an embodiment of the disclosure, 8 Tx can be divided into K antenna port groups, in which K is a positive integer less than 8. For example, the 8 antenna ports may be grouped into 2 or 4 antenna port groups, in which all the antenna ports can be used for the full coherence transmission.

Optionally, the 8 antenna ports may be evenly assigned, or the 8 antenna ports may be unevenly assigned. Optionally, the 8 antenna ports can be sequentially or cyclically assigned to 2 or 4 antenna port groups; or a transmission coherence between the 8 antenna ports can be determined and the 8 antenna ports can be assigned to K antenna port groups based on the transmission coherence between the 8 antenna ports. Optionally, for a multi panel (MP) terminal, all antenna ports on an antenna panel can be divided into one antenna port group, in which the number of antenna panels is the number of antenna port groups. Optionally, a transmission coherence between the antenna panels on the terminal is determined, and based on the transmission coherence between the antenna panels, the 8 antenna ports are assigned to 2 or 4 antenna port groups.

In a case that the 8 antenna ports are divided into 2 antenna port groups, one grouping method is: the first antenna port group consists of antenna ports 0,2,4,6 and the second antenna port group consists of antenna ports 1,3,5,7; another grouping method is: the first antenna port group consists of antenna ports 0,1,2,3 and the second antenna port group consists of antenna ports 4,5,6,7.

In a case that the 8 antenna ports are divided into 4 antenna port groups, one grouping method is: the first antenna port group consists of antenna ports 0,1, the second antenna port group consists of antenna ports 2,3, the third antenna port group consists of antenna ports 4,5, and the fourth antenna port group consists of antenna ports 6,7; another grouping method is: the first antenna port group consists of antenna ports 0, 2, the second antenna port group consists of antenna ports 1, 3, the third antenna port group consists of antenna ports 4, 6, and the fourth antenna port group consists of antenna ports 5, 7.

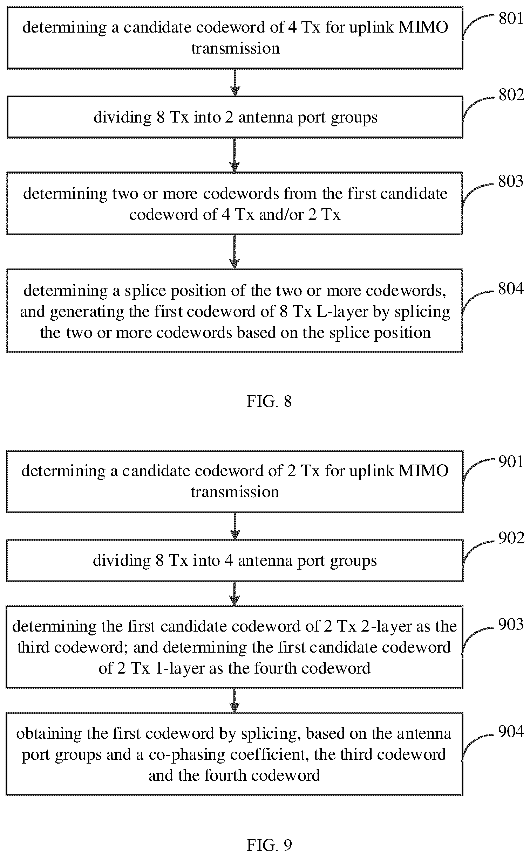

As shown in FIG. 3, 8 Tx can be arranged according to a single antenna panel and dual-polarized antenna arrangement, and can be grouped based on the dual-polarized antenna pairs or grouped based on a polarization direction.

Optionally, 8 Tx can be divided into 2 antenna port groups. In some implementations, 8 Tx are grouped based on the dual-polarized antenna pairs. For example, from left to right, there are a first and a second group of dual-polarized antennas for coherence transmission, and a third and a fourth group of dual-polarized antennas for coherence transmission, then the first antenna port group is {0,1,4,5} and the second antenna port group is {2,3,6,7}. In some implementations, 8 Tx are grouped based on the polarization direction. For example, there are blue antenna ports for coherence transmission and red antenna ports for coherence transmission, then the first antenna port group is {0,1,2,3} and the second antenna port group is {4,5,6,7}.

Optionally, 8 Tx can be divided into 4 antenna port groups. In some implementations, 8 Tx are grouped based on the dual-polarized antenna pairs. Each dual-polarized antenna pair is used for coherence transmission, then the first antenna port group is {0, 4}, the second antenna port group is {1, 5}, the third antenna port group is {2, 6}, and the fourth antenna port group is {3, 7}. In other implementations, 8 Tx are grouped based on the polarization direction. For example, the blue antenna ports are grouped into two coherence transmission groups and the red antenna ports are grouped into two coherence transmission groups, then the first antenna port group is {0,1}, the second antenna port group is {2,3}, the third antenna port group is {4,5}, and the fourth antenna port group is {6, 7}.

In addition, other configurations of the number of antenna port groups and other grouping methods are not excluded. These variations only affect the mapping relationship between layers and antenna ports in terms of codeword.

It should be noted that under different antenna port numbering rules, the serial numbers of antenna ports may vary. For example, the antenna ports may be numbered in a binary manner, and the serial numbers may be 00, 01, 10... Despite the different antenna port serial numbers, the method for determining a codeword provided in the embodiments of the disclosure can still be applied, as long as the corresponding layer is mapped on the corresponding antenna port serial number.

Optionally, 8 Tx can be divided into K antenna port groups, in which K is a positive integer less than 8. In an embodiment of the disclosure, K takes the value of 2 or 4. Further, a third codeword is determined from the candidate codeword, and a fourth codeword corresponding to the third codeword is determined; and the first codeword is obtained by splicing, based on the antenna port groups and a co-phasing coefficient, the third codeword and the fourth codeword. In order to ensure full coherence of the transmission layers within the antenna port group, it is necessary to design the co-phasing coefficient for the splicing process, and to obtain the first codeword by splicing, based on the co-phasing coefficient, the third codeword and the fourth codeword. The co-phasing coefficient may be determined based on a co-phasing coefficient capability supported by the communication device, and may include a phase angle of 90° ($\varphi$ = j), 180° ($\varphi$ = -1), 270° ($\varphi$ = -j). In addition, the communication device may support more phase angles. For example, more phase angles may be determined based on an angular spacing of 45°.

In a case of dividing 8 Tx into 2 antenna port groups, the first codeword for the antenna partial coherence transmission of 8 Tx L-layer for the uplink MIMO transmission can be determined based on the first candidate codeword of 4 Tx and/or 2 Tx. During the uplink transmission, the data transmitted by each layer can be mapped to all antenna ports via the first codeword for the antenna full coherence transmission.

As a possible implementation, one third codeword can be determined from 4 Tx, and the fourth codeword can be determined based on the determined third codeword. The first codeword for the antenna full coherence transmission of 8 Tx L-layer is determined.

As another possible implementation, two or more codewords are determined from the first candidate codeword of 4 Tx. The first codeword of 8 Tx L-layer is generated by splicing the determined two or more codewords.

As another possible implementation, the third codeword may be determined from the first candidate codeword of 4 Tx and the fourth codeword may be determined from the first candidate codeword of 2 Tx. The first codeword for the antenna full coherence transmission of 8 Tx L-layer may be determined based on the determined third codeword and the determined fourth codeword.

As another possible implementation, the third codeword is determined from the second candidate codeword of 4 Tx, and the fourth codeword corresponding to the third codeword is determined. The first codeword for the antenna full coherence transmission of 8 Tx L-layer may be determined based on the determined third codeword and the determined fourth codeword.

As another possible implementation, two codewords are determined from the third candidate codeword for the antenna non-coherence transmission of 4 Tx. The second codeword for the antenna non-coherence transmission of 8 Tx L-layer is generated by splicing the determined two codewords.

In a case of dividing 8 Tx into 2 antenna port groups, the first codeword for the antenna partial coherence transmission of 8 Tx L-layer for the uplink MIMO transmission can be determined based on the first candidate codeword of 2 Tx.

It should be noted that in the embodiments of the disclosure, in a case where any codeword is not normalized, a normalization coefficient of the any codeword may be determined, and energy normalization is performed on the any codeword based on the normalization coefficient. Performing the energy normalization on the codeword is also applicable to the following embodiments.

In the embodiments of the disclosure, the first candidate codeword of 4 Tx and/or 2 Tx for the uplink MIMO transmission is determined, and the first codeword for the antenna partial coherence transmission and/or the second codeword for the antenna non-coherence transmission of 8 Tx L-layer may be determined based on the candidate codeword of 4 Tx and/or 2 Tx. In the embodiments of the disclosure, by constructing a codeword for the antenna partial coherence transmission or a codeword for the antenna non-coherence transmission in a high dimension of 8 Tx based on a transmission codeword in a low dimension, the uplink MIMO is able to support the transmission requirements of the 1st layer to the 8th layer of 8 Tx, thus further enhancing the uplink MIMO technology.

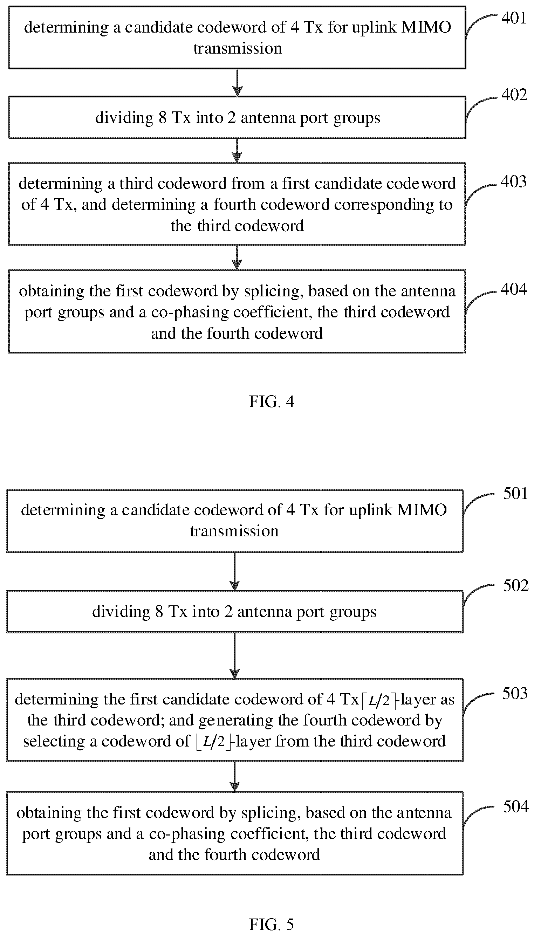

Referring to FIG. 4, FIG. 4 is a flow chart illustrating a method for determining an uplink MIMO transmission codeword according to an embodiment of the disclosure. As shown in FIG. 4, the method may include, but is not limited to, the following steps.

At S401, a candidate codeword of 4 Tx for uplink MIMO transmission is determined.

Regarding the detailed description of step S401, reference can be made to the relevant contents described in the above embodiments, which will not be repeated here.

At S402, 8 Tx are divided into 2 antenna port groups.

Regarding the detailed description of step S402, reference can be made to the relevant contents described in the above embodiments, which will not be repeated here.

At S403, a third codeword is determined from the first candidate codeword of 4 Tx, and a fourth codeword corresponding to the third codeword is determined.

At S404, a first codeword is obtained by splicing, based on the antenna port groups and a co-phasing coefficient, the third codeword and the fourth codeword.

In the following, by taking a first antenna port group consisting of {0,1,2,3} and a second antenna port group consisting of {4,5,6,7} as an example, the process of determining an uplink MIMO transmission codeword provided in embodiments of the disclosure is explained.

As a possible implementation, a first candidate codeword of 4 Tx $\lceil L/2 \rceil$ -layer is determined as the third codeword, and the fourth codeword is generated by selecting a codeword of $\lfloor L/2 \rfloor$ -layer from the third codeword.

As another possible implementation, the first candidate codeword of 4 Tx [L/2] -layer is determined as the third codeword, and the first candidate codeword of 4 Tx $\lfloor L/2 \rfloor$ -layer is determined as the fourth codeword.

As another possible implementation, in a case that the number L of transmission layers meeting $1 \leq L \leq 4$, the third codeword is generated by selecting columns 1 to $\lceil L/2 \rceil$ of the first candidate codeword of 4 Tx L-layer. Further, the fourth codeword is generated by selecting columns $\lceil L/2 \rceil + 1$ to L of the first candidate codeword of 4 Tx L-layer.

Further, after determining the third codeword and the fourth codeword, a co-phasing coefficient matrix is determined. A first spliced codeword is generated by splicing the third codeword and a first set zero-element matrix in a row dimension. A second spliced codeword is generated by splicing the fourth codeword and a second set zero-element matrix in the row dimension. A third spliced codeword is generated by splicing the first spliced codeword and the second spliced codeword in a column dimension. Further, the first codeword for the antenna partial coherence transmission of 8 Tx L-layer is generated by performing a matrix dot product operation on the co-phasing coefficient matrix and the third spliced codeword, i.e., coefficients in the co-phasing coefficient matrix are multiplied with a block matrix at a corresponding position in the third spliced codeword.

It should be noted that, when the 2 antenna port groups are determined using other grouping methods, the third codeword and the fourth codeword may be determined based on the above implementations, and elements in the codewords may be spliced to the corresponding antenna ports.

In this embodiment of the disclosure, the first candidate codeword of 4 Tx corresponding to the uplink MIMO transmission is determined, and the first codeword for the antenna partial coherence transmission of 8 Tx L-layer may be determined based on the first candidate codeword of 4 Tx. In this embodiment of the disclosure, by constructing a codeword for the antenna partial coherence transmission in a high dimension of 8 Tx based on a codeword for the antenna full coherence transmission in a low dimension, the uplink MIMO is able to support the transmission requirements of the 1st layer to the 8th layer of 8 Tx, thus further enhancing the uplink MIMO technology.

Referring to FIG. 5, FIG. 5 is a flow chart illustrating a method for determining an uplink MIMO transmission codeword according to an embodiment of the disclosure. As shown in FIG. 5, the method may include, but is not limited to, the following steps.

At S501, a candidate codeword of 4 Tx for uplink MIMO transmission is determined.

At S502, 8 Tx are divided into 2 antenna port groups.

Regarding the detailed description of steps S501 to S502, reference can be made to the relevant contents described in the above embodiments, which will not be repeated here.

At S503, a first candidate codeword of 4 Tx $\lceil L/2 \rceil$ -layer is determined as a third codeword; and a fourth codeword is generated by selecting a codeword of $\lfloor L/2 \rfloor$ -layer from the third codeword.

At S504, a first codeword is obtained by splicing, based on the antenna port groups and a co-phasing coefficient, the third codeword and the fourth codeword.

In the following, by taking a first antenna port group consisting of {0,1,2,3} and a second antenna port group consisting of {4,5,6,7} as an example, the process of determining an uplink MIMO transmission codeword provided in embodiments of the disclosure is explained.

Optionally, a first candidate codeword $W_{4,\lceil L/2 \rceil}$ for the antenna full coherence transmission of any 4 Tx

$\lceil L/2 \rceil$ -layer is determined as the third codeword. Any $\lfloor L/2 \rfloor$ -layer codeword of $W_{4,\lceil L/2 \rceil}$ is determined as the fourth codeword $W'_{4,\lceil L/2 \rceil}$. For example, the fourth codeword is generated by selecting a codeword of the first $\lfloor L/2 \rfloor$ layers from the third codeword.

1 and $\varphi$ are set as co-phasing coefficients, and the co-phasing coefficient matrix is determined as $\Phi = \begin{bmatrix} 1 & 0 \\ 0 & \varphi \end{bmatrix}$ .

Further, after determining the third codeword and the fourth codeword, the co-phasing coefficient matrix is determined. A first spliced codeword is generated by splicing the third codeword and a first set zero-element matrix in a row dimension. A second spliced codeword is generated by splicing the fourth codeword and a second set zero-element matrix in the row dimension. A third spliced codeword is generated by splicing the first spliced codeword and the second spliced codeword in a column dimension. Further, the first codeword for the antenna partial coherence transmission of 8 Tx L-layer is generated by performing a matrix dot product operation on the co-phasing coefficient matrix and the third spliced codeword, i.e., coefficients in the co-phasing coefficient matrix are multiplied with a block matrix at a corresponding position in the third spliced codeword.

The first codeword $W_{8,L}$ for the antenna partial coherence transmission of 8 Tx L-layer may be

$$W_{8,L} = \begin{bmatrix} W_{4,\lceil L/2 \rceil} & \mathbf{0} \\ \mathbf{0} & \varphi W'_{4,\lceil L/2 \rceil} \end{bmatrix} .$$

For example, in the case of L=7, the first candidate codeword for the antenna full coherence transmission of 4 Tx 4-layer is the third codeword, i.e.,

$$W_{4,4} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}, \quad W'_{4,4} = \begin{bmatrix} 1 & 1 & 1 \\ 1 & -1 & 1 \\ 1 & 1 & -1 \\ 1 & -1 & -1 \end{bmatrix} .$$

, where $W'_{4,4}$ includes columns 1, 2, 3 of $W_{4,4}$, which is the fourth codeword corresponding to the third codeword.

In the case of $\Phi = \begin{bmatrix} 1 & 0 \\ 0 & j \end{bmatrix}$ , the first codeword for the antenna partial coherence transmission of 8 Tx 7-layer is

$$W_{8,7} = \begin{bmatrix} W_{4,4} & \mathbf{0} \\ \mathbf{0} & j W'_{4,4} \end{bmatrix} .$$

It should be noted that, in the case that the L-layer indicates an odd number of layers, based on a number l of layers corresponding to the third codeword, l layers are selected from L layers in an order from the 1st layer to the L-th layer (in a front-to-back order) or from the L-th layer to the 1st layer (in a back-to-front order), to determine the third codeword. A value of l is a positive integer less than or equal to 4. For example, in the case that the L-layer indicates an odd number of layers and the third codeword is a candidate codeword of 4 Tx 4-layer, the codeword of the first 4 layers may be selected in a front-to-back order as the third codeword $W_{4,4}$, while the remaining 3 layers are determined by the fourth codeword, e.g., the first three columns or the last three columns of $W'_{4,4}$ may be used. Alternatively, the codeword of the last 4 layers may be selected in a back-to-front order as the third codeword $W_{4,4}$, while the remaining 3 layers are determined by the fourth codeword, e.g., the first three columns or the last three columns of $W'_{4,4}$ may be used.

In this embodiment of the disclosure, the first candidate codeword of 4 Tx corresponding to the uplink MIMO transmission is determined, and the first codeword for the antenna partial coherence transmission of 8 Tx L-layer may be determined based on the first candidate codeword of 4 Tx. In this embodiment of the disclosure, by constructing a codeword for the antenna partial coherence transmission in a high dimension of 8 Tx based on a codeword for the antenna full coherence transmission in a low dimension, the uplink MIMO is able to support the transmission requirements of the 1st layer to the 8th layer of 8 Tx, thus further enhancing the uplink MIMO technology.

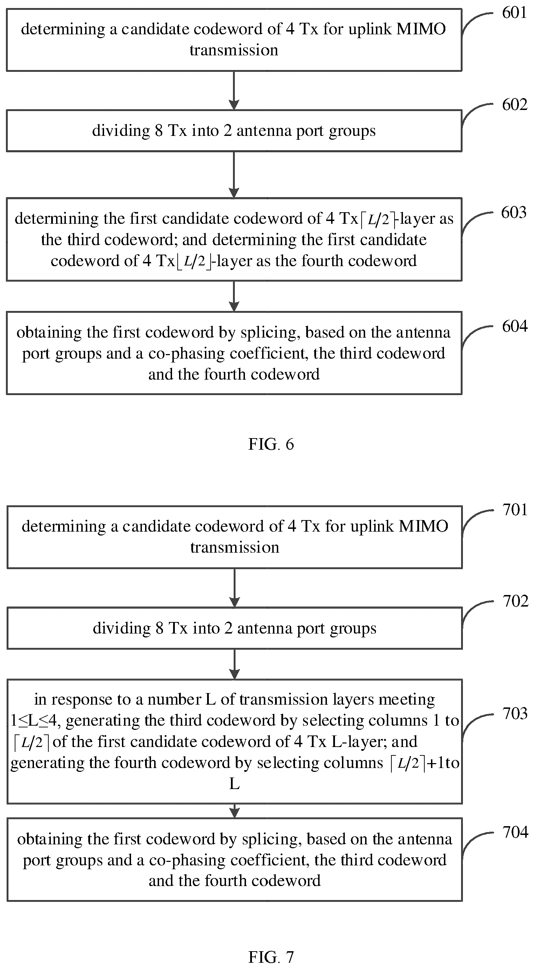

Referring to FIG. 6, FIG. 6 is a flow chart illustrating a method for determining an uplink MIMO transmission codeword according to an embodiment of the disclosure. As shown in FIG. 6, the method may include, but is not limited to, the following steps.

At S601, a candidate codeword of 4 Tx for uplink MIMO transmission is determined.

At S602, 8 Tx are divided into 2 antenna port groups.

Regarding the detailed description of steps S601 to S602, reference can be made to the relevant contents described in the above embodiments, which will not be repeated here.

At S603, a first candidate codeword of 4 Tx [L/2] -layer is determined as a third codeword, and a first candidate codeword of 4 Tx $\lfloor L/2 \rfloor$ -layer is determined as a fourth codeword.

At S604, a first codeword is obtained by splicing, based on the antenna port groups and a co-phasing coefficient, the third codeword and the fourth codeword.

In the following, by taking a first antenna port group consisting of {0,1,2,3} and a second antenna port group consisting of {4,5,6,7} as an example, the process of determining an uplink MIMO transmission codeword provided in embodiments of the disclosure is explained.

Optionally, the first candidate codeword for the antenna full coherence transmission of any 4 Tx $\lceil L/2 \rceil$ -layer is determined as the third codeword $W_{4,\lceil L/2 \rceil}$, and the first candidate codeword for the antenna full coherence transmission of the any 4 Tx $\lfloor L/2 \rfloor$ -layer is determined as the third codeword $W_{4,\lfloor L/2 \rfloor}$.

1 and $\varphi$ are set as co-phasing coefficients, and a co-phasing coefficient matrix is determined as $\Phi = \begin{bmatrix} 1 & 0 \\ 0 & \varphi \end{bmatrix}$.

In this embodiment of the disclosure, after determining the third codeword and the fourth codeword, regarding the process of splicing the third codeword and the fourth codeword reference can be made to the relevant contents described in the above embodiments, which will not be repeated here.

The first codeword $W_{8,L}$ for the antenna partial coherence transmission of 8 Tx L-layer may be

$$W_{8,L} = \begin{bmatrix} W_{4,\lceil L/2 \rceil} & \mathbf{0} \\ \mathbf{0} & \varphi W_{4,\lfloor L/2 \rfloor} \end{bmatrix}.$$

For example, in the case of L=7, the first candidate codeword $W_{4,4} = \begin{bmatrix} 1 & 1 & 1 & 1 \\ 1 & -1 & 1 & -1 \\ 1 & 1 & -1 & -1 \\ 1 & -1 & -1 & 1 \end{bmatrix}$ for the antenna full coherence transmission of 4 Tx 4-layer is determined as the third codeword, and the first candidate codeword $W_{4,3} = \begin{bmatrix} 1 & 1 & 1 \\ 1 & -1 & 1 \\ 1 & 1 & -1 \\ 1 & -1 & -1 \end{bmatrix}$ for the antenna full coherence transmission of 4 Tx 3-layer is determined as the fourth codeword.

In the case of $\Phi = \begin{bmatrix} 1 & 0 \\ 0 & j \end{bmatrix}$, the first codeword for the antenna partial coherence transmission of 8 Tx 7-layer is

$$W_{8,7} = \begin{bmatrix} W_{4,4} & \mathbf{0} \\ \mathbf{0} & jW_{4,3} \end{bmatrix} = \begin{bmatrix} 1 & 1 & 1 & 1 & 0 & 0 & 0 \\ 1 & -1 & 1 & -1 & 0 & 0 & 0 \\ 1 & 1 & -1 & -1 & 0 & 0 & 0 \\ 1 & -1 & -1 & 1 & 0 & 0 & 0 \\ 0 & 0 & 0 & 0 & 1 & 1 & 1 \\ 0 & 0 & 0 & 0 & 1 & -1 & 1 \\ 0 & 0 & 0 & 0 & 1 & 1 & -1 \\ 0 & 0 & 0 & 0 & 1 & -1 & -1 \end{bmatrix}.$$

For another example, in the case of L=3, the first candidate codeword $W_{4,2} = \begin{bmatrix} 1 & 1 \\ 1 & 1 \\ 1 & -1 \\ 1 & -1 \end{bmatrix}$ for the antenna full coherence transmission of 4 Tx 2-layer is determined as the third codeword, and the second candidate codeword

$W_{4,1} = \begin{bmatrix} 1 \\ 1 \\ -j \\ -j \end{bmatrix}$ for the antenna full coherence transmission of 4 Tx 1-layer is determined as the fourth codeword. In the case

of $\Phi = \begin{bmatrix} 1 & 0 \\ 0 & j \end{bmatrix}$ , the first codeword for the antenna partial coherence transmission of 8 Tx 3-layer is

$$W_{8,3} = \begin{bmatrix} 1 & 1 & 0 \\ 1 & 1 & 0 \\ 1 & -1 & 0 \\ 1 & -1 & 0 \\ 0 & 0 & 1 \\ 0 & 0 & 1 \\ 0 & 0 & -j \\ 0 & 0 & -j \end{bmatrix}.$$

In this embodiment of the disclosure, the first candidate codeword of 4 Tx corresponding to the uplink MIMO transmission is determined, and the first codeword for the antenna partial coherence transmission of 8 Tx L-layer may be determined based on the first candidate codeword of 4 Tx. In this embodiment of the disclosure, by constructing a codeword for the antenna partial coherence transmission in a high dimension of 8 Tx based on a codeword for the antenna full coherence transmission in a low dimension, the uplink MIMO is able to support the transmission requirements of the 1st layer to the 8th layer of 8 Tx, thus further enhancing the uplink MIMO technology.

Referring to FIG. 7, FIG. 7 is a flow chart illustrating a method for determining an uplink MIMO transmission codeword according to an embodiment of the disclosure. As shown in FIG. 7, the method may include, but is not limited to, the following steps.

At S701, a candidate codeword of 4 Tx for uplink MIMO transmission is determined.

At S702, 8 Tx are divided into 2 antenna port groups.

Regarding the detailed description of steps S701 to S702, reference can be made to the relevant contents described in the above embodiments, which will not be repeated here.

At S703, in response to a number L of transmission layers meeting $1 \le L \le 4$, a third codeword is generated by selecting columns 1 to $\lceil L/2 \rceil$ of a first candidate codeword of 4 Tx L-layer, and a fourth codeword is generated by selecting columns $\lceil L/2 \rceil + 1$ to L.

At S704, a first codeword is obtained by splicing, based on the antenna port groups and a co-phasing coefficient, the third codeword and the fourth codeword.

In the following, by taking a first antenna port group consisting of {0,1,2,3} and a second antenna port group consisting of {4,5,6,7} as an example, the process of determining an uplink MIMO transmission codeword provided in embodiments of the disclosure is explained.

In the case of the number L of transmission layers meeting $1 \leq L \leq 4$, the first candidate codeword $W_{4,L}$ for the antenna full coherence transmission of any 4 Tx L-layer is determined. In an embodiment of the disclosure, the third codeword is generated by selecting columns 1 to $\lceil L/2 \rceil$ of the first candidate codeword of 4 Tx L-layer. For example, the third codeword $W_{4,L}(:,1:\lceil L/2 \rceil)$ refers to columns 1 to $\lceil L/2 \rceil$ of the matrix $W_{4,L}$. Further, the fourth codeword is generated by selecting columns $\lceil L/2 \rceil+1$ to L of the first candidate codeword of 4 Tx L-layer. For example, the fourth codeword $W_{4,L}(:,\lceil L/2 \rceil+1:L)$ refers to columns $\lceil L/2 \rceil+1$ to L of the matrix $W_{4,L}$.

1 and $\varphi$ are set as co-phasing coefficients, and a co-phasing coefficient matrix is determined as $\Phi = \begin{bmatrix} 1 & 0 \\ 0 & \varphi \end{bmatrix}$.

In this embodiment of the disclosure, after determining the third codeword and the fourth codeword, the process of splicing the third codeword and the fourth codeword can be referred to the relevant contents described in the above embodiments, which will not be repeated here.

The first codeword $W_{8,L}$ for the antenna partial coherence transmission of 8 Tx L-layer may be

$$W_{8,L} = \begin{bmatrix} W_{4,L}(:,1:\lceil L/2 \rceil) & \mathbf{0} \\ \mathbf{0} & \varphi W_{4,L}(:,\lceil L/2 \rceil+1:L) \end{bmatrix}.$$

For example, in the case of L=3, the first candidate codeword for the antenna full coherence transmission of 4 Tx 3-layer is $W_{4,3} = \begin{bmatrix} 1 & 1 & 1 \\ 1 & -1 & 1 \\ 1 & 1 & -1 \\ 1 & -1 & -1 \end{bmatrix}$. The third codeword $W_{4,3}(:,1:\lceil L/2 \rceil) = \begin{bmatrix} 1 & 1 \\ 1 & -1 \\ 1 & 1 \\ 1 & -1 \end{bmatrix}$ is generated by selecting columns 1 to 2 from $W_{4,3}$. Further, the fourth codeword $W_{4,3}(:,\lceil L/2 \rceil+1:L) = \begin{bmatrix} 1 \\ 1 \\ -1 \\ -1 \end{bmatrix}$ is generated by selecting the last column. In the case of $\Phi = \begin{bmatrix} 1 & 0 \\ 0 & j \end{bmatrix}$, the first codeword for the antenna partial coherence transmission of 8 Tx 3-layer is

$$W_{8,3} = \begin{bmatrix} 1 & 1 & 0 \\ 1 & -1 & 0 \\ 1 & 1 & 0 \\ 1 & -1 & 0 \\ 0 & 0 & j \\ 0 & 0 & j \\ 0 & 0 & -j \\ 0 & 0 & -j \end{bmatrix}.$$

In this embodiment of the disclosure, the first candidate codeword of 4 Tx corresponding to the uplink MIMO transmission is determined, and the first codeword for the antenna partial coherence transmission of 8 Tx L-layer may be determined based on the first candidate codeword of 4 Tx. In this embodiment of the disclosure, by constructing a codeword for the antenna partial coherence transmission in a high dimension of 8 Tx based on a codeword for the antenna full coherence transmission in a low dimension, the uplink MIMO is able to support the transmission requirements of the 1st layer to the 8th layer of 8 Tx, thus further enhancing the uplink MIMO technology.

Referring to FIG. 8, FIG. 8 is a flow chart illustrating a method for determining an uplink MIMO transmission codeword according to an embodiment of the disclosure. As shown in FIG. 8, the method may include, but is not limited to, the following steps.

At S801, a candidate codeword of 4 Tx for uplink MIMO transmission is determined.

At S802, 8 Tx are divided into 2 antenna port groups.

Regarding the detailed description of steps S801 to S802, reference can be made to the relevant contents described in the above embodiments, which will not be repeated here.

At S803, two or more codewords are determined from a first candidate codeword of 4 Tx and/or 2 Tx.

At S804, a splice position of the two or more codewords is determined, and a first codeword of 8 Tx L-layer is generated by splicing the two or more codewords based on the splice position.

In the following, by taking a first antenna port group consisting of {0,1,2,3} and a second antenna port group consisting of {4,5,6,7} as an example, the process of determining an uplink MIMO transmission codeword provided in embodiments of the disclosure is explained.

As a possible implementation, two or more codewords are determined from the first candidate codeword of 4 Tx, the splice position of the two or more codewords is determined, and the first codeword of 8 Tx L-layer is generated by splicing the two or more codewords based on the splice position.

Optionally, one first codeword for the antenna full coherence transmission of 8 Tx can be obtained by splicing 2 identical codewords for the antenna full coherence transmission of 4 Tx. For example, the first codeword for the antenna partial coherence transmission of 8 Tx 8-layer can be obtained by splicing 2 identical codewords for the antenna full coherence transmission of 4 Tx 4-layer. That is, the first codeword for the antenna partial coherence transmission of 8 Tx 8-layer can be obtained by placing a codeword for the antenna full coherence transmission of 4 Tx 4-layer at the upper left corner and the lower right corner, respectively. Further, for example, the first codeword for the antenna partial coherence transmission of 8 Tx 6-layer can be obtained by splicing 2 identical codewords for the antenna full coherence transmission of 4 Tx 3-layer. That is, the first codeword for the antenna partial coherence transmission of 8 Tx 6-layer can be obtained by placing a codeword for the antenna full coherence transmission of 4 Tx 3-layer at the upper left corner and the lower right corner, respectively.

As another possible implementation, for partial coherent codewords, a cross-layer design can be considered. A plurality of different codewords for the antenna full coherence transmission in low dimensions may be used to construct a codeword of 8 Tx. For example, the first codeword for the antenna full coherence transmission of 8 Tx is obtained by splicing 2 or 3 or 4 different codewords for the antenna full coherence transmission of 4 Tx and/or 2 Tx.

Optionally, two or more codewords can be determined from the first candidate codeword of 4 Tx and/or 2 Tx, the splice position of the two or more codewords is determined, and the first codeword for the antenna partial coherence transmission of 8 Tx L-layer is generated by splicing the two or more codewords based on the splice position.

Optionally, based on the L-layer, a codeword is determined from the first candidate codewords of 4 Tx as the third codeword, and the first candidate codeword of 2 Tx 2-layer and the first candidate codeword of 2 Tx 1-layer are determined as the fourth codeword.

For example, for an 8 Tx 5-layer design, if the first antenna port group consists of {0,1,2,3} and the second antenna port group consists of {4,5,6,7}, the codeword of 8 Tx may consist of the first candidate codeword for the antenna full coherence transmission of 4 Tx 2-layer, the first candidate codeword for the antenna full coherence transmission of 2 Tx 2-layer, and the first candidate codeword for the antenna full coherence transmission of 2 Tx 1-layer. The condition to be satisfied is that the sum of the number of transmission layers of 4 Tx and the number of transmission layers of the two 2 Tx is equal to the number of transmission layers of 8 Tx.

$$W_{8,5} = \begin{bmatrix} W_{4,2} & 0 & 0 \\ 0 & \varphi_1 W_{2,2} & 0 \\ 0 & 0 & \varphi_2 W_{2,1} \end{bmatrix}, \quad W_{4,2} = \begin{bmatrix} 1 & 1 \\ 1 & 1 \\ 1 & -1 \\ 1 & -1 \end{bmatrix}, \quad W_{2,2} = \begin{bmatrix} 1 & 1 \\ 1 & -1 \end{bmatrix}, \quad W_{2,1} = \begin{bmatrix} 1 \\ 1 \end{bmatrix}$$

For example, , and if $\varphi_1 = j$, $\varphi_2 =$

$$W_{8,5} = \begin{bmatrix} 1 & 1 & 0 & 0 & 0 \\ 1 & 1 & 0 & 0 & 0 \\ 1 & -1 & 0 & 0 & 0 \\ 1 & -1 & 0 & 0 & 0 \\ 0 & 0 & j & j & 0 \\ 0 & 0 & j & -j & 0 \\ 0 & 0 & 0 & 0 & -j \\ 0 & 0 & 0 & 0 & -j \end{bmatrix}$$

-j, then .

In this embodiment of the disclosure, the first candidate codeword of 4 Tx corresponding to the uplink MIMO transmission is determined, and the first codeword for the antenna partial coherence transmission of 8 Tx L-layer may be determined based on the first candidate codeword of 4 Tx. In this embodiment of the disclosure, by constructing a codeword for the antenna partial coherence transmission in a high dimension of 8 Tx based on a codeword for the antenna full coherence transmission in a low dimension, the uplink MIMO is able to support the transmission requirements of the 1st layer to the 8th layer of 8 Tx, thus further enhancing the uplink MIMO technology.

It should be noted that, when the 2 antenna port groups are determined using other grouping methods, the third codeword and the fourth codeword may be determined based on the above implementations, and the elements in the codewords may be further spliced to the corresponding antenna ports.

Referring to FIG. 9, FIG. 9 is a flow chart illustrating a method for determining an uplink MIMO transmission codeword according to an embodiment of the disclosure. As shown in FIG. 9, the method may include, but is not limited to, the following steps.

At S901, a candidate codeword of 2 Tx for uplink MIMO transmission is determined.

At S902, 8 Tx are divided into 4 antenna port groups.

Regarding the detailed description of steps S901 to S902, reference can be made to the relevant contents described in the above embodiments, which will not be repeated here.

At S903, a first candidate codeword of 2 Tx 2-layer is determined as a third codeword, and a first candidate codeword of 2 Tx 1-layer is determined as a fourth codeword.

At S904, a first codeword is obtained by splicing, based on the antenna port groups and a co-phasing coefficient, the third codeword and the fourth codeword.

In the following, by taking a first antenna port group consisting of $\{0,1\}$, a second antenna port group consisting of $\{2,3\}$, a third antenna port group consisting of $\{4,5\}$, and a fourth antenna port group consisting of $\{6,7\}$ as an example, the process of determining an uplink MIMO transmission codeword provided in embodiments of the disclosure is explained.

Optionally, the first candidate codeword $W_{2,2}$ for the antenna full coherence transmission of any 2 Tx 2-layer is determined, and the first candidate codeword $W_{2,1}$ for the antenna full coherence transmission of any 2 Tx 1-layer is determined. $W_{2,2}$ is determined as the third codeword, and $W_{2,1}$ is determined as the fourth codeword.

It should be noted that, in the case of the number L of transmission layers meeting $4 \leq L \leq 8$, to determine the first codeword for the antenna partial coherence transmission of 8 Tx L-layer based on the first candidate codeword of 2 Tx, the numbers of required third codewords and fourth codewords need to be determined based on the value of L. In an embodiment of the disclosure, the number of the required third codewords is L-4 and the number of the required fourth codewords is 8-L.

In this embodiment of the disclosure, after determining the third codeword and the fourth codeword, the process of splicing the third codeword and the fourth codeword can be referred to the relevant contents described in the above embodiments, which will not be repeated here.

Each codeword requires a corresponding co-phasing coefficient. The co-phasing coefficient in the last column is $\varphi_{\lceil L/2 \rceil}$, 1 and $\varphi_{\lceil L/2 \rceil}$ are set as the co-phasing coefficients. It can be determined that a co-phasing coefficient matrix is a diagonal array, and the diagonal elements can be $1, 2, \cdots, \varphi_{\lceil L/2 \rceil - 1}$. The first codeword $W_{8,L}$ for the antenna partial coherence transmission of 8 Tx L-layer can be *L-4 codewords of 2Tx 2-layer in total* 8-L codewords of 2Tx 1-layer in total

$$W_{8,L} = \begin{bmatrix} \overbrace{W_{2,2} \quad 0}^{L-4\ codewords\ of\ 2Tx\ 2-layer\ in\ total} & \overbrace{0}^{8-L\ codewords\ of\ 2Tx\ 1-layer\ in\ total} \\ 0 \quad \ddots & 0 \\ 0 \quad 0 & \varphi_{\lceil L/2 \rceil} W_{2,1} \end{bmatrix}.$$

For example, in the case of L=8, the first candidate codeword for the antenna full coherence transmission of 2 Tx 2-layer is $W_{2,2} = \begin{bmatrix} 1 & 1 \\ 1 & -1 \end{bmatrix}$, which is the third codeword. The first candidate codeword for the antenna full coherence transmission of 2 Tx 1-layer is $W_{2,1} = \begin{bmatrix} 1 \\ 1 \end{bmatrix}$, which is the fourth codeword. If the co-phasing coefficient is a diagonal matrix and the diagonal elements are (1,-1,$j$,-$j$), the first codeword for the antenna partial coherence transmission of 8 Tx 8-layer

$$W_{8,8} = \begin{bmatrix} 1 & 1 & 0 & 0 & 0 & 0 & 0 & 0 \\ 1 & -1 & 0 & 0 & 0 & 0 & 0 & 0 \\ 0 & 0 & -1 & -1 & 0 & 0 & 0 & 0 \\ 0 & 0 & -1 & 1 & 0 & 0 & 0 & 0 \\ 0 & 0 & 0 & 0 & j & j & 0 & 0 \\ 0 & 0 & 0 & 0 & j & -j & 0 & 0 \\ 0 & 0 & 0 & 0 & 0 & 0 & -j & -j \\ 0 & 0 & 0 & 0 & 0 & 0 & -j & j \end{bmatrix}$$

is:

In this embodiment of the disclosure, the first candidate codeword of 4 Tx corresponding to the uplink MIMO transmission is determined, and the first codeword for the antenna partial coherence transmission of 8 Tx L-layer may be determined based on the first candidate codeword of 4 Tx. In this embodiment of the disclosure, by constructing a codeword for the antenna partial coherence transmission in a high dimension of 8 Tx based on a codeword for the antenna full coherence transmission in a low dimension, the uplink MIMO is able to support the transmission requirements of the 1st layer to the 8th layer of 8 Tx, thus further enhancing the uplink MIMO technology.

It should be noted that, when the 4 antenna port groups are determined using other grouping methods, the third codeword and the fourth codeword may be determined based on the above implementations, and the elements in the codewords may be further spliced to the corresponding antenna ports.

For example, when the antenna ports are grouped as {0,4}, {1,5}, {2,6}, {3,7}, the first codeword for the antenna

$$W_{8,8} = \begin{bmatrix} 1 & 1 & 0 & 0 & 0 & 0 & 0 & 0 \\ 0 & 0 & -1 & -1 & 0 & 0 & 0 & 0 \\ 0 & 0 & 0 & 0 & j & j & 0 & 0 \\ 0 & 0 & 0 & 0 & 0 & 0 & -j & -j \\ 1 & -1 & 0 & 0 & 0 & 0 & 0 & 0 \\ 0 & 0 & -1 & 1 & 0 & 0 & 0 & 0 \\ 0 & 0 & 0 & 0 & j & -j & 0 & 0 \\ 0 & 0 & 0 & 0 & 0 & 0 & -j & j \end{bmatrix}$$

partial coherence transmission of 8 Tx 8-layer is .

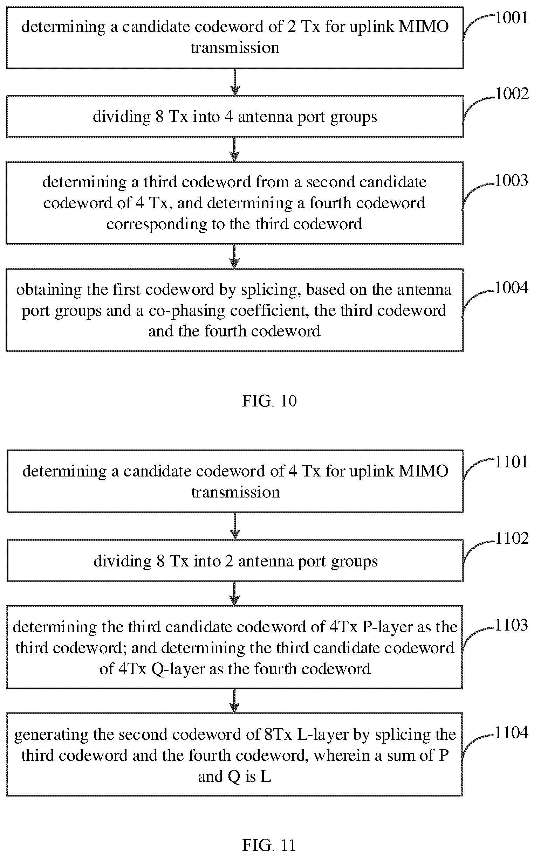

Referring to FIG. 10, FIG. 10 is a flow chart illustrating a method for determining an uplink MIMO transmission codeword according to an embodiment of the disclosure. As shown in FIG. 10, the method may include, but is not limited to, the following steps.

At S1001, a candidate codeword of 2 Tx for uplink MIMO transmission is determined.

At S1002, 8 Tx are divided into 4 antenna port groups.

Regarding the detailed description of steps S901 to S902, reference can be made to the relevant contents described in the above embodiments, which will not be repeated here.

At S1003, a third codeword is determined from a second candidate codeword of 4 Tx, and a fourth codeword corresponding to the third codeword is determined.

At S1004, a first codeword is obtained by splicing, based on the antenna port groups and a co-phasing coefficient, the third codeword and the fourth codeword.

In an embodiment of the disclosure, the first codeword for the antenna partial coherence transmission of 8 Tx L-layer may be determined based on the second candidate codeword for the antenna partial coherence transmission of 4 Tx. It should be noted that in the case that the first codeword of 8 Tx L-layer is determined based on the second candidate codeword of 4 Tx, a sparse matrix corresponding to a transmission codeword of 8 Tx of the antenna port groups is composed of a sparse matrix corresponding to a codeword for the antenna partial coherence transmission of 4 Tx. For example, if the first antenna port group consists of {0, 2}, the second antenna port group consists of {1, 3}, the third antenna port group consists of {4, 6}, and the fourth antenna port group consists of {5, 7}, then the sparse matrix corresponding to a transmission codeword of 8-layer is
$$\begin{bmatrix} 1 & 1 & 0 & 0 & 0 & 0 & 0 & 0 \\ 0 & 0 & 1 & 1 & 0 & 0 & 0 & 0 \\ 1 & 1 & 0 & 0 & 0 & 0 & 0 & 0 \\ 0 & 0 & 1 & 1 & 0 & 0 & 0 & 0 \\ 0 & 0 & 0 & 0 & 1 & 1 & 0 & 0 \\ 0 & 0 & 0 & 0 & 0 & 0 & 1 & 1 \\ 0 & 0 & 0 & 0 & 1 & 1 & 0 & 0 \\ 0 & 0 & 0 & 0 & 0 & 0 & 1 & 1 \end{bmatrix}$$
. The sparse matrix corresponding to the transmission codeword of 8-layer includes a sparse matrix of 4 Tx
$$\begin{bmatrix} 1 & 1 & 0 & 0 \\ 0 & 0 & 1 & 1 \\ 1 & 1 & 0 & 0 \\ 0 & 0 & 1 & 1 \end{bmatrix}$$
.

In the following, by taking a first antenna port group consisting of {0,2}, a second antenna port group consisting of {1,3}, a third antenna port group consisting of {4,6}, and a fourth antenna port group consisting of {5, 7} as an example, the process of determining an uplink MIMO transmission codeword provided in embodiments of the disclosure is explained.

As a possible implementation, in the case of L=4, the second candidate codeword of 4 Tx 2-layer is determined as the third codeword, and the third codeword is determined as the fourth codeword.

For example, the second candidate codeword $W_{4,2}$ for the antenna partial coherence transmission of any 4 Tx 2-layer is determined as the third codeword, and $W_{4,2}$ is determined as the fourth codeword.

1 and $\varphi$ are set as co-phasing coefficients, and a co-phasing coefficient matrix is determined as $\Phi = \begin{bmatrix} 1 & 0 \\ 0 & \varphi \end{bmatrix}$ .

The first codeword $W_{8,L}$ for the antenna partial coherence transmission of 8 Tx L-layer may be $W_{8,L} = \begin{bmatrix} W_{4,2} & \mathbf{0} \\ \mathbf{0} & \varphi W_{4,2} \end{bmatrix}$ .

As another possible implementation, in the case of L=5 or 6, the second candidate codeword of 4 Tx 4-layer is determined, and the third codeword is generated by selecting a codeword composed of L-2 columns from the second candidate codeword. Further, the second candidate codeword of 4 Tx 2-layer is determined as the fourth codeword. For example, the second candidate codeword $W_{4,4}$ for the antenna partial coherence transmission of any 4 Tx 4-layer is determined, and the third codeword $W_{4,4}(:,1:(L-2))$ is generated by selecting a codeword composed of L-2 columns from $W_{4,4}$. Further, the second candidate codeword $W_{4,2}$ for the antenna partial coherence transmission of any 4 Tx 2-layer is determined as the fourth codeword.

In the case that the co-phasing coefficient matrix is $\Phi = \begin{bmatrix} 1 & 0 \\ 0 & j \end{bmatrix}$ , the first codeword $W_{8,L}$ for the antenna partial coherence transmission of 8 Tx L-layer may be $W_{8,L} = \begin{bmatrix} W_{4,4}(:,1:(L-2)) & \mathbf{0} \\ \mathbf{0} & \varphi W_{2,2} \end{bmatrix}$ .

As another possible implementation, in the case of L=7 or 8, the second candidate codeword of 4 Tx 4-layer is determined as the third codeword, and the fourth codeword is generated by selecting a codeword composed of first L-4 columns in the third codeword.

For example, the second candidate codeword $W_{4,4}$ for the antenna partial coherence transmission of 4 Tx 4-layer is determined as the third codeword. The fourth codeword is generated by selecting a codeword composed of first L-4 columns in $W_{4,4}$.

For example, in the case of L=7, and the first candidate codeword for the antenna partial coherence transmission of 4 Tx 4-layer is $W_{4,4} = \begin{bmatrix} 1 & 1 & 0 & 0 \\ 0 & 0 & 1 & 1 \\ 1 & -1 & 0 & 0 \\ 0 & 0 & 1 & -1 \end{bmatrix}$, $W_{4,4}$ is determined as the third codeword, and the fourth codeword $W_{4,4}$ (:,1: (7-4)) is generated by selecting a codeword composed of first L-4 columns in $W_{4,4}$. The first three columns of $W_{4,4}$ is $W_{4,4}$

(:,1:(7-4)). In the case that the co-phasing coefficient matrix is $\Phi = \begin{bmatrix} 1 & 0 \\ 0 & j \end{bmatrix}$, the first codeword for the antenna partial

$$W_{8,7} = \begin{bmatrix} 1 & 1 & 0 & 0 & 0 & 0 & 0 \\ 0 & 0 & 1 & 1 & 0 & 0 & 0 \\ 1 & -1 & 0 & 0 & 0 & 0 & 0 \\ 0 & 0 & 1 & -1 & 0 & 0 & 0 \\ 0 & 0 & 0 & 0 & j & j & 0 \\ 0 & 0 & 0 & 0 & 0 & 0 & j \\ 0 & 0 & 0 & 0 & j & -j & 0 \\ 0 & 0 & 0 & 0 & 0 & 0 & j \end{bmatrix}$$

coherence transmission of 8 Tx 7-layer is .

It should be noted that in this embodiment of the disclosure, after determining the third codeword and the fourth codeword, the process of splicing the third codeword and the fourth codeword can be referred to the relevant contents described in the above embodiments, which will not be repeated here.

In this embodiment of the disclosure, the first candidate codeword of 2 Tx corresponding to the uplink MIMO transmission is determined, and the first codeword for the antenna partial coherence transmission of 8 Tx L-layer may be determined based on the first candidate codeword of 2 Tx. In this embodiment of the disclosure, by constructing a codeword for the antenna partial coherence transmission in a high dimension of 8 Tx based on a codeword for the antenna full coherence transmission in a low dimension, the uplink MIMO is able to support the transmission requirements of the 1st layer to the 8th layer of 8 Tx, thus further enhancing the uplink MIMO technology.

It should be noted that, when the 4 antenna port groups are determined using other grouping methods, the third codeword and the fourth codeword may be determined based on the above implementations, and the elements in the codewords may be further spliced to the corresponding antenna ports.

Referring to FIG. 11, FIG. 11 is a flow chart illustrating a method for determining an uplink MIMO transmission codeword according to an embodiment of the disclosure. As shown in FIG. 11, the method may include, but is not limited to, the following steps.

At S1101, a candidate codeword of 4 Tx for uplink MIMO transmission is determined.

At S1102, 8 Tx are divided into 4 antenna port groups.

Regarding the detailed description of steps S1101 to S1102, reference can be made to the relevant contents described in the above embodiments, which will not be repeated here.

At S1103, a third candidate codeword of 4 Tx P-layer is determined as a third codeword, and a third candidate codeword of 4 Tx Q-layer is determined as a fourth codeword.

At S1104, a second codeword of 8 Tx L-layer is generated by splicing the third codeword and the fourth codeword, in which a sum of P and Q is L.

For example, the third candidate codeword $W_{4,4} = \begin{bmatrix} 1 & 0 & 0 & 0 \\ 0 & 1 & 0 & 0 \\ 0 & 0 & 1 & 0 \\ 0 & 0 & 0 & 1 \end{bmatrix}$ for the antenna non-coherence transmission

$$W_{4,4} = \begin{bmatrix} 1 & 0 & 0 \\ 0 & 1 & 0 \\ 0 & 0 & 1 \\ 0 & 0 & 0 \end{bmatrix}$$

of 4 Tx 4-layer is determined as the third codeword. Further, the third candidate codeword $W_{4,4}$ for the antenna non-coherence transmission of 4 Tx 3-layer is determined as the fourth codeword, and the second codeword for

$$W_{8,7} = \begin{bmatrix} 1 & 0 & 0 & 0 & 0 & 0 & 0 \\ 0 & 1 & 0 & 0 & 0 & 0 & 0 \\ 0 & 0 & 1 & 0 & 0 & 0 & 0 \\ 0 & 0 & 0 & 1 & 0 & 0 & 0 \\ 0 & 0 & 0 & 0 & 1 & 0 & 0 \\ 0 & 0 & 0 & 0 & 0 & 1 & 0 \\ 0 & 0 & 0 & 0 & 0 & 0 & 1 \\ 0 & 0 & 0 & 0 & 0 & 0 & 0 \end{bmatrix}$$

the antenna non-coherence transmission of 8 Tx 7-layer is .

In this embodiment of the disclosure, the third candidate codeword of 4 Tx corresponding to the uplink MIMO transmission is determined, and the second codeword for the antenna non-coherence transmission of 8 Tx L-layer may be determined based on the third candidate codeword of 4 Tx. In this embodiment of the disclosure, by constructing a codeword for the antenna non-coherence transmission in a high dimension of 8 Tx based on a codeword for the antenna full coherence transmission in a low dimension, the uplink MIMO is able to support the transmission requirements of the 1st layer to the 8th layer of 8 Tx, thus further enhancing the uplink MIMO technology.

It should be noted that the embodiments described above may be executed individually or in any combination. Each embodiment described above may be executed by a network device (such as a base station). In an implementation, each embodiment described above is executed by the network device (such as the base station), and the network device (such as the base station) sends the determined second codeword to the UE.

In some possible implementations, each embodiment described above may also be performed by the UE. Further, the UE sends the determined second codeword to the network device (such as the base station).

In other possible implementations, each embodiment described above may also be performed independently by the network device (such as the base station) and the UE.

The method for determining a codeword for the antenna full coherence transmission provided in the above embodiments may be applicable to the terminal and the network device. After determining the first codeword for the antenna full coherence transmission, a precoding codebook may be determined based on the first codeword. The terminal and the network device may perform PUSCH transmission based on the precoding codebook.

The uplink transmission (such as the PUSCH transmission) based on the codebook is illustrated as follows.

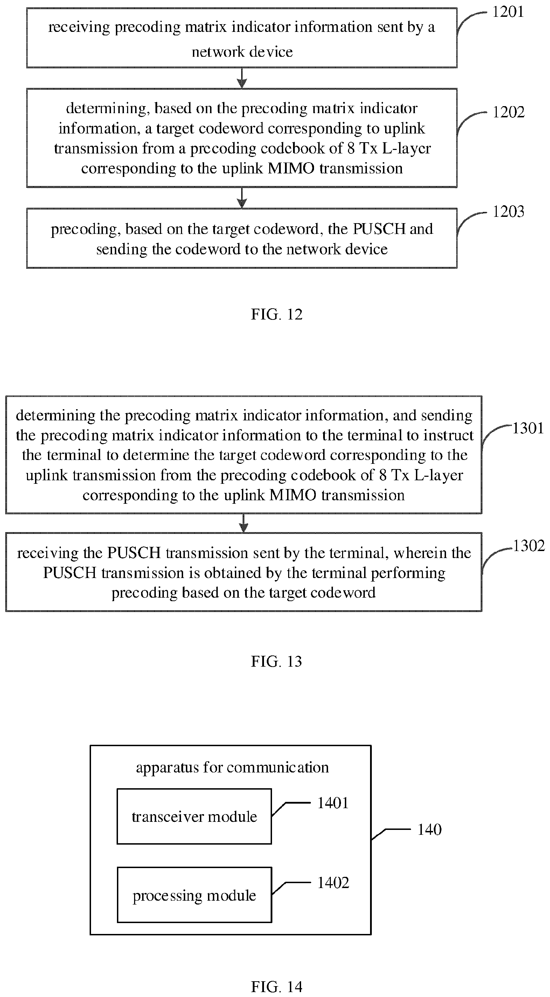

Referring to FIG. 12, FIG. 12 is a flow chart illustrating a method for uplink transmission according to an embodiment of the disclosure. The method is performed by a terminal. As shown in FIG. 12, the method may include, but is not limited to, the following steps.

At S1201, precoding matrix indicator information sent by a network device is received.

It should be noted that during the PUSCH transmission based on the precoding codebook, the network device may send transmit precoding matrix indicator (TPMI) information to the terminal. The TPMI carries precoding codebook design information. Accordingly, the terminal may receive the TPMI sent by the network device.

The TPMI indicates a target codeword in the precoding matrix.

At S1202, a target codeword corresponding to uplink transmission is determined from a precoding codebook of 8 Tx L-layer corresponding to the uplink MIMO transmission based on the precoding matrix indicator information.

It should be noted that the terminal may determine, based on the TPMI, the target codeword corresponding to the uplink transmission from the precoding codebook of 8 Tx L-layer corresponding to the uplink MIMO transmission. It should be noted that the precoding codebook corresponding to the uplink MIMO transmission includes the first codeword for the antenna partial coherence transmission and the second codeword for the antenna non-coherence transmission determined in the above embodiments. The process of determining the first codeword and the second codeword of 8 Tx L-layer can be referred to the relevant contents described in the above embodiments, which will not be repeated here.

The terminal may determine a target codeword from the precoding codebook based on the TPMI. Optionally, a mapping relationship between the codeword and an index may be preset, and the target codeword for the uplink transmission may be determined from the precoding codebook based on the index.

At S1203, the PUSCH is precoded based on the target codeword and sent to the network device.

After obtaining the target codeword, the PUSCH may be precoded based on the target codeword, and the precoded PUSCH may be sent to the network device.

In this embodiment of the disclosure, the precoding matrix indicator information sent by the network device is received, the target codeword corresponding to the uplink transmission is determined from the precoding codebook of 8 Tx L-layer corresponding to the uplink MIMO transmission based on the precoding matrix indicator information, and the PUSCH is precoded based on the target codeword and sent to the network device. In the disclosure, by constructing a codeword for the antenna partial coherence transmission in a high dimension of 8 Tx based on a transmission codeword in a low dimension, the uplink MIMO is able to support the transmission requirements of the 1st layer to the 8th layer of 8 Tx, thus further enhancing the uplink MIMO technology.

Referring to FIG. 13, FIG. 13 is a flow chart illustrating a method for uplink transmission according to an embodiment of the disclosure. The method is performed by a network device. As shown in FIG. 13, the method may include, but is not limited to, the following steps.

At S1301, precoding matrix indicator information is determined, and the precoding matrix indicator information is sent to a terminal to instruct the terminal to determine a target codeword corresponding to uplink transmission from a precoding codebook of 8 Tx L-layer corresponding to the uplink MIMO transmission.

In an embodiment of the disclosure, the network device may receive sounding reference signals (SRS) resources sent by the terminal, and perform a channel estimation based on the SRS resources. The network device determines the TPMI based on the estimated channel condition, and sends the TPMI to the terminal. The TPMI indicates a codeword in the precoding matrix, which may be an index of the codeword.

It should be noted that the precoding codebook corresponding to the uplink MIMO transmission includes the first codeword for the antenna partial coherence transmission and the second codeword for the antenna non-coherence transmission determined in the above embodiments. The process of determining the first codeword and the second codeword of 8 Tx L-layer can be referred to the relevant contents described in the above embodiments, which will not be repeated here.

At S1302, the PUSCH transmission sent by the terminal is received, in which the PUSCH transmission is obtained by the terminal in performing precoding based on the target codeword.

After receiving the TPMI, the terminal may determine the target codeword for the uplink transmission. The terminal preforms precoding on the PUSCH based on the target codeword, and sends the precoded PUSCH to the network device. Accordingly, the network device may receive the PUSCH transmission sent by the terminal.

In this embodiment of the disclosure, the precoding matrix indicator information is determined, and the precoding matrix indicator information is sent to the terminal to instruct the terminal to determine the target codeword corresponding to the uplink transmission from the precoding codebook of 8 Tx L-layer corresponding to the uplink MIMO transmission, and the PUSCH transmission sent by the terminal is received, in which the PUSCH transmission is obtained by the terminal in performing precoding based on the target codeword. In this embodiment of the disclosure, the precoding matrix indicator information sent by the network device is received, the target codeword corresponding to the uplink transmission is determined from the precoding codebook of 8 Tx L-layer corresponding to the uplink MIMO transmission based on the precoding matrix indicator information, and the PUSCH is precoded based on the target codeword and sent to the network device. In the disclosure, by constructing a codeword for the antenna partial coherence transmission in a high dimension of 8 Tx based on a transmission codeword in a low dimension, the uplink MIMO is able to support the transmission requirements of the 1st layer to the 8th layer of 8 Tx, thus further enhancing the uplink MIMO technology.

In the above embodiments of the present disclosure, the methods provided by the embodiments of the present disclosure are introduced from the perspectives of the network device and the terminal respectively. In order to implement the various functions in the methods provided by the embodiments of the present disclosure, the network device and the first terminal each may include a hardware structure or a software module, and implement the above various functions in the form of a hardware structure, a software module, or a hardware structure plus a software module. Any of the above functions may be implemented in the form of a hardware structure, a software module, or a hardware structure plus a software module.

Referring to FIG. 14, FIG. 14 is a block diagram illustrating a communication apparatus according to an embodiment of the disclosure. The communication apparatus 140 illustrated in FIG. 14 may include a transceiver module 1401 and a processing module 1402. The transceiver module 1401 may include a sending module and/or a receiving module. The sending module is configured to implement a sending function, and the receiving module is configured to implement a receiving function. The transceiver module 1401 may implement the sending function and/or the receiving function.

The communication apparatus 140 may be a terminal, an apparatus in the terminal, or an apparatus that may be used in matching to the terminal. Alternatively, the communication apparatus 140 may be a network device, an apparatus in the network device, or an apparatus that may be used in matching to the network device.

The communication apparatus 140 may include a processing module 1402.

The processing module 1402 is configured to determine a candidate codeword of 4 Tx and/or 2 Tx for uplink MIMO transmission, in which the candidate codeword includes at least one of a first candidate codeword for antenna full coherence transmission, a second candidate codeword for antenna partial coherence transmission, or a third candidate codeword for antenna non-coherence transmission; and determine, based on the candidate codeword, a first codeword for the antenna partial coherence transmission and/or a second codeword for the antenna non coherence transmission of 8 Tx L-layer for the uplink MIMO transmission, in which L is less than or equal to 8.

Alternatively, the processing module 1402 is further configured to divide 8 Tx into K antenna port groups, in which K is a positive integer less than 8; determine a third codeword from the candidate codeword, and determining a fourth codeword corresponding to the third codeword; and obtain the first codeword by splicing, based on the antenna port groups and a co-phasing coefficient, the third codeword and the fourth codeword.

Alternatively, the processing module 1402 is further configured to determine a co-phasing coefficient matrix; generate a first spliced codeword by splicing the third codeword and a first set zero-element matrix in a row dimension; generate a second spliced codeword by splicing the fourth codeword and a second set zero-element matrix in the row dimension; generate a third spliced codeword by splicing the first spliced codeword and the second spliced codeword in a column dimension; and generate the first codeword by performing a matrix dot product operation on the co-phasing coefficient matrix and the third spliced codeword, in which coefficients in the co-phasing coefficient matrix are multiplied with a block matrix at a corresponding position in the third spliced codeword.

Alternatively, the processing module 1402 is further configured to determine the third codeword from the first candidate codeword of 4 Tx, and determining the fourth codeword corresponding to the third codeword.

Alternatively, the processing module 1402 is further configured to determine the first candidate codeword of 4 Tx $\lceil L/2 \rceil$-layer as the third codeword; and generate the fourth codeword by selecting a codeword of $\lfloor L/2 \rfloor$-layer from the third codeword.

Alternatively, the processing module 1402 is further configured to determine the first candidate codeword of 4 Tx $\lceil L/2 \rceil$-layer as the third codeword; and determine the first candidate codeword of 4 Tx $\lfloor L/2 \rfloor$-layer as the fourth codeword.

Alternatively, the processing module 1402 is further configured to, in response to a number L of transmission layers meeting , generate the third codeword by selecting columns 1 to $\lceil L/2 \rceil$ of the first candidate codeword of 4 Tx L-layer; and generate the fourth codeword by selecting columns $\lceil L/2 \rceil + 1$ to L of the first candidate codeword of 4 Tx L-layer.

Alternatively, the processing module 1402 is further configured to determine two or more codewords from the first candidate codeword of 4 Tx; and determine a splice position of the two or more codewords, and generating the first codeword of 8 Tx L-layer by splicing the two or more codewords based on the splice position.

Alternatively, the processing module 1402 is further configured to determine the first candidate codeword of 2 Tx 2-layer as the third codeword; and determine the first candidate codeword of 2 Tx 1-layer as the fourth codeword.

Alternatively, K=4, a sparse matrix corresponding to a transmission codeword of 8 Tx of the antenna port groups is included of a sparse matrix corresponding to a codeword for the antenna partial coherence transmission of 4 Tx. The processing module 1402 is further configured to determine the third codeword from the second candidate codeword of 4 Tx, and determine the fourth codeword corresponding to the third codeword.

Alternatively, the processing module 1402 is further configured to, in response to L=4, determine the second candidate codeword of 4 Tx 2-layer as the third codeword; and determine the third codeword as the fourth codeword.

Alternatively, the processing module 1402 is further configured to, in response to L=5 or 6, generate the third codeword by selecting a codeword composed of L-2columns from the second candidate codeword of 4 Tx 4-layer; and determine the second candidate codeword of 4 Tx 2-layer as the fourth codeword.

Alternatively, the processing module 1402 is further configured to, in response to L=7 or 8, determine the second candidate codeword of 4 Tx 4-layer as the third codeword; and generate the fourth codeword by selecting a codeword composed of first L-4 columns in the third codeword.

Alternatively, the processing module 1402 is further configured to determine, based on the L-layer, a codeword from the first candidate codeword of 4 Tx as the third codeword; and determine the first candidate codeword of 2 Tx 2-layer and the first candidate codeword of 2 Tx 1-layer as the fourth codeword.

Alternatively, the processing module 1402 is further configured to determine the third candidate codeword of 4 Tx P-layer as the third codeword; determine the third candidate codeword of 4 Tx Q-layer as the fourth codeword; and generate the second codeword of 8 Tx L-layer by splicing the third codeword and the fourth codeword, in which a sum of P and Q is L.

Alternatively, the processing module 1402 is further configured to determine, based on a phase angle supported by a communication device, the co-phasing coefficient.

Alternatively, the processing module 1402 is further configured to, in response to the L-layer indicating an odd number of layers, select, based on a number I of layers corresponding to the third codeword, I layers of L layers in an order from 1st layer to the L-th layer, or from the L-th layer to the 1st layer, to determine the third codeword; in which a value of I is a positive integer less than or equal to 4; and determine a codeword of remaining layers as the fourth codeword.

Alternatively, the processing module 1402 is further configured to determining a normalization coefficient of any codeword, and performing energy normalization on any codeword based on the normalization coefficient.

In embodiments of the disclosure, a first candidate codeword of 2 Tx corresponding to the uplink MIMO transmission is determined, and the first codeword for the antenna partial coherence transmission of 8 Tx L-layer may be determined based on the first candidate codeword of 2 Tx. In embodiments of the disclosure, by constructing a codeword for the antenna partial coherence transmission of a high dimensional 8 Tx based on a codeword for the antenna full coherence transmission of a low dimensional, the uplink MIMO is able to support the requirement of transmission from 1st layer to 8th layer of 8 Tx, thus further enhancing the uplink MIMO technology.

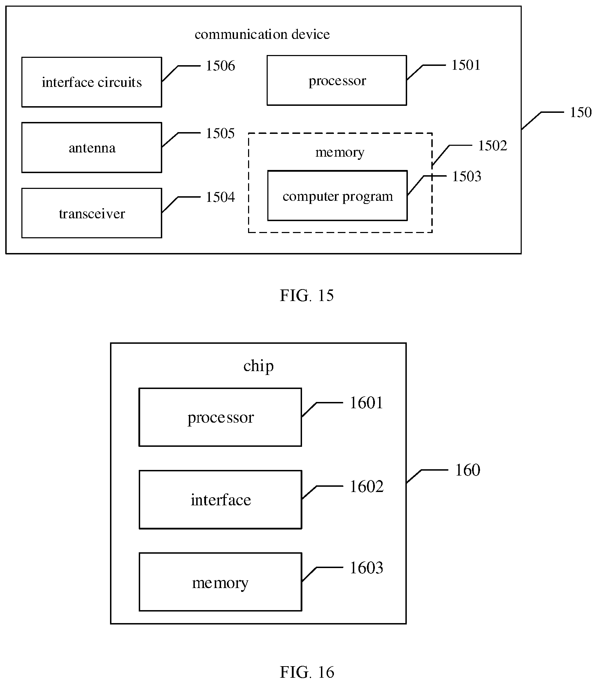

Referring to FIG. 15, FIG. 15 is a schematic diagram illustrating a communication apparatus 150 according to an embodiment of the disclosure. The communication apparatus 150 may be a network device, a terminal, or a chip, a chip system or a processor that supports the network device to realize the above-described methods, or a chip, a chip system or a processor that supports the terminal to realize the above-described methods. The device may be configured to realize the methods described in the above method embodiments, and for details, please refer to the descriptions of the above-described method embodiments.

The communication apparatus 150 may include one or more processors 1501. The processor 1501 may be a general purpose processor or a dedicated processor, such as, a baseband processor or a central processor. The baseband processor is configured to process a communication protocol and communication data. The central processor is configured to control the communication device (e.g., a base station, a baseband chip, a terminal, a terminal chip, a central unit (CU) or a distributed unit (DU)), to executing a computer program, and to process data of the computer program.

Alternatively, the communication apparatus 150 may include one or more memories 1502 on which a computer program 1503 may be stored. The processor 1501 executes the computer program 1503 to cause the communication apparatus 150 to perform the methods described in the above method embodiments. Alternatively, data may also be stored in the memory 1502. The communication apparatus 150 and the memory 1502 may be provided separately or may be integrated together.

Alternatively, the communication apparatus 150 may also include a transceiver 1504 and an antenna 15015. The transceiver 1504 may be referred to as a transceiver unit, a transceiver machine, or a transceiver circuit, for realizing a receiving and sending function. The transceiver 1504 may include a receiver and a transmitter. The receiver may be referred to as a receiver machine or a receiving circuit, for realizing a receiving function. The transmitter may be referred to as a sender machine or sending circuit, for realizing the sending function.

Alternatively, the communication apparatus 150 may also include one or more interface circuits 1506. The interface circuits 1506 are configured to receive code instructions and transmit the code instructions to the processor 1501. The processor 1501 runs the code instructions to cause the communication apparatus 150 to perform the method described in the method embodiments.

In an implementation, the processor 1501 may include a transceiver for implementing the receiving and sending function. For example, the transceiver may be a transceiver circuit, an interface, or an interface circuit. The transceiver circuit, interface, or interface circuitry for implementing the receiving and sending function may be separated, or may be integrated together. The transceiver circuit, interface, or interface circuit described above may be configured for code/data reading and writing, or may be configured for signal sending or delivery.

In an implementation, the processor 1501 may store the computer program 1503. The processor 1501 executes the computer program 1503 to cause the communication device 150 to perform the methods described in the above method embodiments. The computer program 1503 may be solidified in the processor 1501, in which case the processor 1501 may be implemented by hardware.

In an implementation, the communication apparatus 150 may include circuits. The circuits may implement the sending, receiving or communicating function in the above method embodiments. The processor and the transceiver described in the disclosure may be implemented on an integrated circuit (IC), an analog IC, a radio frequency integrated circuit (RFIC), a mixed signal IC, an application specific integrated circuit (ASIC), a printed circuit board (PCB), and an electronic device. The processor and transceiver may also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be the network device or the terminal (such as the terminal in the above method embodiments), but a scope of the communication device described in the disclosure is not limited thereto, and a structure of the communication device may not be limited by FIG. 15. The communication device may be a stand-alone device or may be part of a larger device. For example the communication device may be:

(1) a stand-alone IC, a chip, a chip system or a subsystem;

(2) a collection of ICs including one or more ICs, where alternatively, the collection of ICs may also include storage components for storing data and a computer program;

(3) an ASIC, such as a modem;

(4) a module that may be embedded within other devices;

(15) a receiver, a terminal, a smart terminal, a cellular phone, a wireless device, a handheld machine, a mobile unit, an in-vehicle device, a network device, a cloud device, an artificial intelligence device, and the like; and

(6) others.

For the case where the communication device may be the chip or the chip system, please refer to the block diagram of the chip illustrated in FIG. 16. The chip illustrated in FIG. 16 includes a processor 1601 and an interface 1602. There may be one or more processors 1601, and there may be multiple interfaces 1602.

For the case where a chip is configured to implement embodiments of the disclosure: for the case where the communication device may be the chip or the chip system, please refer to the block diagram of the chip illustrated in FIG. 16. The chip illustrated in FIG. 16 includes a processor 1601 and an interface 1602. There may be one or more processors 1601, and there may be multiple interfaces 1602.

The processors 1601 is configured to determine a candidate codeword of 4 Tx and/or 2 Tx for uplink MIMO transmission, in which the candidate codeword includes at least one of a first candidate codeword for antenna full coherence transmission, a second candidate codeword for antenna partial coherence transmission, or a third candidate codeword for antenna non-coherence transmission; and determine, based on the candidate codeword, a first codeword for the antenna partial coherence transmission and/or a second codeword for the antenna non coherence transmission of 8 Tx L-layer for the uplink MIMO transmission, in which L is less than or equal to 8.

Alternatively, the processors 1601 is further configured to divide 8 Tx into K antenna port groups, in which K is a positive integer less than 8; determine a third codeword from the candidate codeword, and determining a fourth codeword corresponding to the third codeword; and obtain the first codeword by splicing, based on the antenna port groups and a co-phasing coefficient, the third codeword and the fourth codeword.

Alternatively, the processors 1601 is further configured to determine a co-phasing coefficient matrix; generate a first spliced codeword by splicing the third codeword and a first set zero-element matrix in a row dimension; generate a second spliced codeword by splicing the fourth codeword and a second set zero-element matrix in the row dimension; generate a third spliced codeword by splicing the first spliced codeword and the second spliced codeword in a column dimension; and generate the first codeword by performing a matrix dot product operation on the co-phasing coefficient matrix and the third spliced codeword, in which coefficients in the co-phasing coefficient matrix are multiplied with a block matrix at a corresponding position in the third spliced codeword.

Alternatively, the processors 1601 is further configured to determine the third codeword from the first candidate codeword of 4 Tx, and determining the fourth codeword corresponding to the third codeword.

Alternatively, the processors 1601 is further configured to determine the first candidate codeword of 4 Tx $\lceil L/2 \rceil$-layer as the third codeword; and generate the fourth codeword by selecting a codeword of $\lfloor L/2 \rfloor \cdot$-layer from the third codeword.

Alternatively, the processors 1601 is further configured to determine the first candidate codeword of 4 Tx $\lceil L/2 \rceil$-layer as the third codeword; and determine the first candidate codeword of 4 Tx $\lfloor L/2 \rfloor$-layer as the fourth codeword.

Alternatively, the processors 1601 is further configured to, in response to a number L of transmission layers meeting , generate the third codeword by selecting columns 1 to $\lceil L/2 \rceil$ of the first candidate codeword of 4 Tx L-layer; and generate the fourth codeword by selecting columns $\lceil L/2 \rceil + 1$ to L of the first candidate codeword of 4 Tx L-layer.

Alternatively, the processors 1601 is further configured to determine two or more codewords from the first candidate codeword of 4 Tx; and determine a splice position of the two or more codewords, and generating the first codeword of 8 Tx L-layer by splicing the two or more codewords based on the splice position.

Alternatively, the processors 1601 is further configured to determine the first candidate codeword of 2 Tx 2-layer as the third codeword; and determine the first candidate codeword of 2 Tx 1-layer as the fourth codeword.

Alternatively, K=4, a sparse matrix corresponding to a transmission codeword of 8 Tx of the antenna port groups is included of a sparse matrix corresponding to a codeword for the antenna partial coherence transmission of 4 Tx. The processors 1601 is further configured to determine the third codeword from the second candidate codeword of 4 Tx, and determine the fourth codeword corresponding to the third codeword.

Alternatively, the processors 1601 is further configured to, in response to L=4, determine the second candidate codeword of 4 Tx 2-layer as the third codeword; and determine the third codeword as the fourth codeword.

Alternatively, the processors 1601 is further configured to, in response to L=5 or 6, generate the third codeword by selecting a codeword composed of L-2columns from the second candidate codeword of 4 Tx 4-layer; and determine the second candidate codeword of 4 Tx 2-layer as the fourth codeword.

Alternatively, the processors 1601 is further configured to, in response to L=7 or 8, determine the second candidate codeword of 4 Tx 4-layer as the third codeword; and generate the fourth codeword by selecting a codeword composed of first L-4 columns in the third codeword.

Alternatively, the processors 1601 is further configured to determine, based on the L-layer, a codeword from the first candidate codeword of 4 Tx as the third codeword; and determine the first candidate codeword of 2 Tx 2-layer and the first candidate codeword of 2 Tx 1-layer as the fourth codeword.

Alternatively, the processors 1601 is further configured to determine the third candidate codeword of 4 Tx P-layer as the third codeword; determine the third candidate codeword of 4 Tx Q-layer as the fourth codeword; and generate the second codeword of 8 Tx L-layer by splicing the third codeword and the fourth codeword, in which a sum of P and Q is L.

Alternatively, the processors 1601 is further configured to determine, based on a phase angle supported by a communication device, the co-phasing coefficient.

Alternatively, the processors 1601 is further configured to, in response to the L-layer indicating an odd number of layers, select, based on a number I of layers corresponding to the third codeword, I layers of L layers in an order from 1st layer to the L-th layer, or from the L-th layer to the 1st layer, to determine the third codeword; in which a value of I is a positive integer less than or equal to 4; and determine a codeword of remaining layers as the fourth codeword.

Alternatively, the processors 1601 is further configured to determining a normalization coefficient of any codeword, and performing energy normalization on any codeword based on the normalization coefficient.

In embodiments of the disclosure, a first candidate codeword of 2 Tx corresponding to the uplink MIMO transmission is determined, and the first codeword for the antenna partial coherence transmission of 8 Tx L-layer may be determined based on the first candidate codeword of 2 Tx. In embodiments of the disclosure, by constructing a codeword for the antenna partial coherence transmission of a high dimensional 8 Tx based on a codeword for the antenna full coherence transmission of a low dimensional, the uplink MIMO is able to support the requirement of transmission from 1st layer to 8th layer of 8 Tx, thus further enhancing the uplink MIMO technology.

Alternatively, the chip further includes a memory 1603 configured to store necessary computer programs and data.

It is understood by those skilled in the art that various illustrative logical blocks and steps listed in embodiments of the disclosure may be implemented by electronic hardware, computer software, or a combination of both. Whether such function is implemented by hardware or software depends on a particular application and a design requirement of an entire system. Those skilled in the art may use various methods to implement the described function for each particular application, but such implementation should not be construed as being beyond the scope of protection of embodiments of the disclosure.

Embodiments of the disclosure also provide a system for configuring a cell state. The system includes an apparatus for communication as a terminal and a communication device as a network device in the embodiment illustrated FIG. 14; or, the system includes a communication device as a terminal and a communication device as a network device in the embodiment illustrated in FIG. 15.

The disclosure also provides a readable storage medium for storing instructions. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination of both. When implemented using software, the above embodiments may be implemented, in whole or in part, in the form of the computer program product. The computer program product includes one or more computer programs. When the computer program is loaded and executed on the computer, all or part of processes or functions described in embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or in a wireless manner (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understands that the first, second, and other various numerical numbers involved in the disclosure are only described for the convenience of differentiation, and are not used to limit the scope of the embodiments of the disclosure, but to indicate the order of precedence.

The term "at least one" in the disclosure may also be described as one or more, and the term "multiple" may be two, three, four, or more, which is not limited in the disclosure. In embodiments of the disclosure, for technical features, the terms "first", "second", and "third"; and "A", "B", "C" and "D" and the like are used to distinguish different technical features, the technical features described using the terms "first", "second", and "third"; and "A", "B", "C" and "D"; and the like do not indicate any order of precedence or magnitude.

The correspondences illustrated in the tables in the disclosure may be configured or may be predefined. The values of information in the tables are merely examples and may be configured to other values, which are not limited in the disclosure. In configuring the correspondence between the information and the parameters, there does not require that all the correspondences illustrated in the tables must be configured. For example, the above tables may be adjusted appropriately, such as splitting, merging, and the like. The names of the parameters illustrated in the headings of the above tables may be other names that are understood by the communication device, and the values or representations of the parameters may be other values or expressions that are understood by the communication device. Each of the above tables may also be implemented with other data structures, such as, arrays, queues, containers, stacks, linear tables, pointers, chained lists, trees, graphs, structures, classes, heaps, and hash tables.

The term "pre-definition" in the application may be understood as definition, pre-definition, storage, pre-storage, pre-negotiation, pre-configuration, curing, or pre-firing.

Those skilled in the art may realize that the units and algorithmic steps of the various examples described in combination with the embodiments disclosed herein are capable of being implemented in the form of the electronic hardware, or a combination of the computer software and the electronic hardware. Whether these functions are performed in the hardware or software way depends on the particular application and design constraints of the technical solution. Those skilled in the art may use different ways to implement the described functions for each particular application, but such implementations should not be considered as beyond the scope of the disclosure.

It is clearly understood by those skilled in the field that, for the convenience and brevity of description, detailed work processes of the systems, apparatuses, and units described above may be referred to the corresponding processes in the above method embodiments, which are not be repeated here.

The above is only detailed implementations of the disclosure, but the scope of protection of the disclosure is not limited thereto. Those skilled in the art familiar to the technical field may easily think of changes or substitutions in the technical scope disclosed by the disclosure, which shall be covered by the scope of protection of the disclosure. Therefore, the scope of protection of the disclosure shall be governed by the scope of protection of the appended claims.

**Claims**

1. A method for determining an uplink multiple input multiple output (MIMO) transmission codeword, comprising:

    determining a candidate codeword of 4 transmit antenna ports (Tx) and/or 2 Tx for uplink MIMO transmission, wherein the candidate codeword comprises at least one of a first candidate codeword for antenna full coherence transmission, a second candidate codeword for antenna partial coherence transmission, or a third candidate codeword for antenna non-coherence transmission; and

    determining, based on the candidate codeword, a first codeword for the antenna partial coherence transmission and/or a second codeword for the antenna non-coherence transmission of 8 Tx L-layer for the uplink MIMO transmission, wherein L is less than or equal to 8.

2. The method according to claim 1, wherein determining, based on the candidate codeword, the first codeword for the antenna partial coherence transmission of 8 Tx L-layer for the uplink MIMO transmission comprises:

    dividing 8 Tx into K antenna port groups, wherein K is a positive integer less than 8;

    determining a third codeword from the candidate codeword, and determining a fourth codeword corresponding to the third codeword; and

    obtaining the first codeword by splicing, based on the antenna port groups and a co-phasing coefficient, the third codeword and the fourth codeword.

3. The method according to claim 2, wherein obtaining the first codeword, by splicing, based on the antenna port groups and the co-phasing coefficient, the second codeword and the third codeword comprises:

determining a co-phasing coefficient matrix;

generating a first spliced codeword by splicing the third codeword and a first set zero-element matrix in a row dimension;

generating a second spliced codeword by splicing the fourth codeword and a second set zero-element matrix in the row dimension;

generating a third spliced codeword by splicing the first spliced codeword and the second spliced codeword in a column dimension; and

generating the first codeword by performing a matrix dot product operation on the co-phasing coefficient matrix and the third spliced codeword, wherein coefficients in the co-phasing coefficient matrix are multiplied with a block matrix at a corresponding position in the third spliced codeword.

4. The method according to claim 2 or 3, wherein K=2, and determining the third codeword from the candidate codeword, and determining the fourth codeword corresponding to the third codeword comprises:

determining the third codeword from the first candidate codeword of 4 Tx, and determining the fourth codeword corresponding to the third codeword.

5. The method according to claim 4, wherein determining the third codeword from the first candidate codeword of 4 Tx, and determining the fourth codeword corresponding to the third codeword comprises:

determining a first candidate codeword of 4 Tx $\lceil L/2 \rceil$ -layer as the third codeword; and

generating the fourth codeword by selecting a codeword of $\lfloor L/2 \rfloor$ -layer from the third codeword.

6. The method according to claim 4, wherein determining the third codeword from the first candidate codeword of the 4 Tx, and determining the fourth codeword corresponding to the third codeword comprises:

determining a first candidate codeword of 4 Tx $\lceil L/2 \rceil$ -layer as the third codeword; and

determining a first candidate codeword of 4 Tx $\lfloor L/2 \rfloor$ -layer as the fourth codeword.

7. The method according to claim 4, wherein determining the third codeword from the first candidate codeword of 4 Tx, and determining the fourth codeword based on the third codeword comprises:

in response to a number L of transmission layers meeting $1 \leq L \leq 4$, generating the third codeword by selecting columns 1 to $\lceil L/2 \rceil$ of a first candidate codeword of 4 Tx L-layer; and

generating the fourth codeword by selecting columns $\lceil L/2 \rceil + 1$ to $L$ of a first candidate codeword of 4 Tx L-layer.

8. The method according to claim 2, wherein K=2, and the method further comprises:

determining two or more codewords from the first candidate codeword of 4 Tx; and

determining a splice position of the two or more codewords, and generating the first codeword of 8 Tx L-layer by splicing the two or more codewords based on the splice position.

9. The method according to claim 2 or 3, wherein K=4, and determining the third codeword from the candidate codeword, and determining the fourth codeword corresponding to the third codeword further comprises:

determining a first candidate codeword of 2 Tx 2-layer as the third codeword; and

determining a first candidate codeword of 2 Tx 1-layer as the fourth codeword.

10. The method according to claim 9, wherein a number of the third codewords is L-4; and a number of the fourth codewords is 8-L.

11. The method according to claim 2, wherein K=4, a sparse matrix corresponding to a transmission codeword of 8 Tx of the antenna port groups is comprised of a sparse matrix corresponding to a codeword for the antenna partial coherence transmission of 4 Tx, and determining the third codeword from the candidate codeword, and determining the fourth codeword corresponding to the third codeword comprises:
determining the third codeword from the second candidate codeword of 4 Tx, and determining the fourth codeword corresponding to the third codeword.

12. The method according to claim 11, wherein determining the third codeword from the second candidate codeword of 4 Tx, and determining the fourth codeword corresponding to the third codeword comprises:

in response to L=4, determining a second candidate codeword of 4 Tx 2-layer as the third codeword; and determining the third codeword as the fourth codeword.

13. The method according to claim 11, wherein determining the third codeword from the second candidate codeword of 4 Tx, and determining the fourth codeword corresponding to the third codeword comprises:

in response to L=5 or 6, generating the third codeword by selecting a codeword composed of L-2columns from a second candidate codeword of 4 Tx 4-layer; and
determining a second candidate codeword of 4 Tx 2-layer as the fourth codeword.

14. The method according to claim 11, wherein determining the third codeword from the second candidate codeword of 4 Tx, and determining the fourth codeword corresponding to the third codeword comprises:

in response to L=7 or 8, determining a second candidate codeword of 4 Tx 4-layer as the third codeword; and generating the fourth codeword by selecting a codeword composed of first L-4 columns in the third codeword.

15. The method according to claim 2, wherein K=2, and the method further comprises:

determining, based on the L-layer, a codeword from the first candidate codeword of the 4 Tx as the third codeword; and
determining a first candidate codeword of 2 Tx 2-layer and a first candidate codeword of 2 Tx 1-layer as the fourth codeword.

16. The method according to claim 2, wherein K=2, and determining the second codeword of 8 Tx L-layer comprises:

determining a third candidate codeword of 4 Tx P-layer as the third codeword;
determining a third candidate codeword of 4 Tx Q-layer as the fourth codeword; and
generating the second codeword of 8 Tx L-layer by splicing the third codeword and the fourth codeword, wherein a sum of P and Q is L.

17. The method according to claim 2, further comprising:
determining, based on a phase angle supported by a communication device, the co-phasing coefficient.

18. The method according to claim 2, further comprising:

in response to the L-layer indicating an odd number of layers, selecting, based on a number I of layers corresponding to the third codeword, I layers of L layers in an order from the 1st layer to the L-th layer, or from the L-th layer to the 1st layer, to determine the third codeword; wherein a value of I is a positive integer less than or equal to 4; and
determining a codeword of remaining layers as the fourth codeword.

19. The method according to claim 1, further comprising:
determining a normalization coefficient of any codeword, and performing energy normalization on any codeword based on the normalization coefficient.

20. An apparatus for communication, comprising:
a processing module, configured to determine a candidate codeword of 4 transmit antenna ports (Tx) and/or 2 Tx for uplink MIMO transmission, wherein the candidate codeword comprises at least one of a first candidate codeword for antenna full coherence transmission, a second candidate codeword for antenna partial coherence transmission, or a third candidate codeword for antenna non-coherence transmission; and determine, based on the candidate codeword, a first codeword for the antenna partial coherence transmission and/or a second codeword for the antenna non coherence transmission of 8 Tx L-layer for the uplink MIMO transmission, wherein L is less than or equal to 8.

21. A communication apparatus, comprising a processor and a memory wherein the memory stores a computer program, and when the computer program is executed by the processor, the method of any one of claims 1 to 19 is implemented.

22. A communication apparatus comprises: a processor and an interface circuit; wherein

the interface circuit is configured to receive code instructions and transmit code instructions to the processor; and the processor is configured to execute the code instructions to implement the method of any one of claims 1 to 19.

23. A computer-readable storage medium, configured to store instructions, wherein when the instructions are executed, the method of any one of claims 1 to 18 is implemented.

FIG. 1

determining a candidate codeword of 4 transmit antenna ports (Tx) and/or 2 Tx for uplink MIMO transmission — 201

determining, based on the candidate codeword, a first codeword for the antenna partial coherence transmission and/or a second codeword for the antenna non-coherence transmission of 8 Tx L-layer for the uplink MIMO transmission — 202

FIG. 2

FIG. 3

determining a candidate codeword of 4 Tx for uplink MIMO transmission — 401

dividing 8 Tx into 2 antenna port groups — 402

determining a third codeword from a first candidate codeword of 4 Tx, and determining a fourth codeword corresponding to the third codeword — 403

obtaining the first codeword by splicing, based on the antenna port groups and a co-phasing coefficient, the third codeword and the fourth codeword — 404

FIG. 4

determining a candidate codeword of 4 Tx for uplink MIMO transmission — 501

dividing 8 Tx into 2 antenna port groups — 502

determining the first candidate codeword of 4 Tx $\lceil L/2 \rceil$-layer as the third codeword; and generating the fourth codeword by selecting a codeword of $\lfloor L/2 \rfloor$-layer from the third codeword — 503

obtaining the first codeword by splicing, based on the antenna port groups and a co-phasing coefficient, the third codeword and the fourth codeword — 504

FIG. 5

determining a candidate codeword of 4 Tx for uplink MIMO transmission — 601

dividing 8 Tx into 2 antenna port groups — 602

determining the first candidate codeword of 4 Tx$\lceil L/2 \rceil$-layer as the third codeword; and determining the first candidate codeword of 4 Tx$\lfloor L/2 \rfloor$-layer as the fourth codeword — 603

obtaining the first codeword by splicing, based on the antenna port groups and a co-phasing coefficient, the third codeword and the fourth codeword — 604

FIG. 6

determining a candidate codeword of 4 Tx for uplink MIMO transmission — 701

dividing 8 Tx into 2 antenna port groups — 702

in response to a number L of transmission layers meeting $1 \leq L \leq 4$, generating the third codeword by selecting columns 1 to $\lceil L/2 \rceil$ of the first candidate codeword of 4 Tx L-layer; and generating the fourth codeword by selecting columns $\lceil L/2 \rceil + 1$ to L — 703

obtaining the first codeword by splicing, based on the antenna port groups and a co-phasing coefficient, the third codeword and the fourth codeword — 704

FIG. 7

determining a candidate codeword of 4 Tx for uplink MIMO transmission ⟍ 801

dividing 8 Tx into 2 antenna port groups ⟍ 802

determining two or more codewords from the first candidate codeword of 4 Tx and/or 2 Tx ⟍ 803

determining a splice position of the two or more codewords, and generating the first codeword of 8 Tx L-layer by splicing the two or more codewords based on the splice position ⟍ 804

FIG. 8

determining a candidate codeword of 2 Tx for uplink MIMO transmission ⟍ 901

dividing 8 Tx into 4 antenna port groups ⟍ 902

determining the first candidate codeword of 2 Tx 2-layer as the third codeword; and determining the first candidate codeword of 2 Tx 1-layer as the fourth codeword ⟍ 903

obtaining the first codeword by splicing, based on the antenna port groups and a co-phasing coefficient, the third codeword and the fourth codeword ⟍ 904

FIG. 9

determining a candidate codeword of 2 Tx for uplink MIMO transmission ⌐1001

↓

dividing 8 Tx into 4 antenna port groups ⌐1002

↓

determining a third codeword from a second candidate codeword of 4 Tx, and determining a fourth codeword corresponding to the third codeword ⌐1003

↓

obtaining the first codeword by splicing, based on the antenna port groups and a co-phasing coefficient, the third codeword and the fourth codeword ⌐1004

FIG. 10

determining a candidate codeword of 4 Tx for uplink MIMO transmission ⌐1101

↓

dividing 8 Tx into 2 antenna port groups ⌐1102

↓

determining the third candidate codeword of 4Tx P-layer as the third codeword; and determining the third candidate codeword of 4Tx Q-layer as the fourth codeword ⌐1103

↓

generating the second codeword of 8Tx L-layer by splicing the third codeword and the fourth codeword, wherein a sum of P and Q is L ⌐1104

FIG. 11

receiving precoding matrix indicator information sent by a network device — 1201

determining, based on the precoding matrix indicator information, a target codeword corresponding to uplink transmission from a precoding codebook of 8 Tx L-layer corresponding to the uplink MIMO transmission — 1202

precoding, based on the target codeword, the PUSCH and sending the codeword to the network device — 1203

FIG. 12

determining the precoding matrix indicator information, and sending the precoding matrix indicator information to the terminal to instruct the terminal to determine the target codeword corresponding to the uplink transmission from the precoding codebook of 8 Tx L-layer corresponding to the uplink MIMO transmission — 1301

receiving the PUSCH transmission sent by the terminal, wherein the PUSCH transmission is obtained by the terminal performing precoding based on the target codeword — 1302

FIG. 13

apparatus for communication

transceiver module — 1401

processing module — 1402

— 140

FIG. 14

communication device

interface circuits —— 1506

processor —— 1501

—— 150

antenna —— 1505

memory —— 1502

computer program —— 1503

transceiver —— 1504

FIG. 15

chip

processor —— 1601

—— 160

interface —— 1602

memory —— 1603

FIG. 16

| | | INTERNATIONAL SEARCH REPORT | International application No. |
|---|---|---|---|
| | | | **PCT/CN2022/102074** |

**A.    CLASSIFICATION OF SUBJECT MATTER**

H04B 7/02(2018.01)i

According to International Patent Classification (IPC) or to both national classification and IPC

**B.    FIELDS SEARCHED**

Minimum documentation searched (classification system followed by classification symbols)

H04B

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 码字, 码本, 天线, 端口, 候选, 备选, 相干, 传输, 层, 拼接, 矩阵, 组, 相位, 系数, codebook, code, antenna, port, candidate, coherent, matrix, 4Tx, 8Tx, MIMO

**C.    DOCUMENTS CONSIDERED TO BE RELEVANT**

| Category* | Citation of document, with indication, where appropriate, of the relevant passages | Relevant to claim No. |
|---|---|---|
| X | CN 102217206 A (MARVELL WORLD TRADE LTD.) 12 October 2011 (2011-10-12) description, paragraphs [0004]-[0051] | 1, 19-23 |
| A | CN 108418615 A (NANJING UNIVERSITY OF POSTS AND TELECOMMUNICATIONS) 17 August 2018 (2018-08-17) entire document | 1-23 |
| A | US 2019089432 A1 (MEDIATEK INC.) 21 March 2019 (2019-03-21) entire document | 1-23 |
| A | WO 2021155610 A1 (HUAWEI TECHNOLOGIES CO., LTD.) 12 August 2021 (2021-08-12) entire document | 1-23 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2022** | **21 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

| | | International application No.<br>**PCT/CN2022/102074** |
|---|---|---|

| Patent document<br>cited in search report | | | Publication date<br>(day/month/year) | Patent family member(s) | | | Publication date<br>(day/month/year) |
|---|---|---|---|---|---|---|---|
| CN | 102217206 | A | 12 October 2011 | US | 2014198869 | A1 | 17 July 2014 |
| | | | | JP | 2014003618 | A | 09 January 2014 |
| | | | | KR | 20110102452 | A | 16 September 2011 |
| | | | | US | 2010172430 | A1 | 08 July 2010 |
| | | | | EP | 2374221 | A1 | 12 October 2011 |
| | | | | JP | 2012514411 | A | 21 June 2012 |
| | | | | JP | 2015092713 | A | 14 May 2015 |
| | | | | WO | 2010076778 | A1 | 08 July 2010 |
| | | | | US | 2013148755 | A1 | 13 June 2013 |
| | | | | US | 8391392 | B2 | 05 March 2013 |
| | | | | JP | 5322327 | B2 | 23 October 2013 |
| | | | | US | 8711970 | B2 | 29 April 2014 |
| | | | | CN | 102217206 | B | 08 October 2014 |
| | | | | JP | 5671104 | B2 | 18 February 2015 |
| | | | | US | 9031150 | B2 | 12 May 2015 |
| | | | | JP | 5907631 | B2 | 26 April 2016 |
| | | | | KR | 101673497 | B1 | 07 November 2016 |
| | | | | EP | 2374221 | B1 | 11 September 2019 |
| CN | 108418615 | A | 17 August 2018 | CN | 108418615 | B | 09 February 2021 |
| US | 2019089432 | A1 | 21 March 2019 | WO | 2019057094 | A1 | 28 March 2019 |
| | | | | TW | 201921864 | A | 01 June 2019 |
| | | | | CN | 110036571 | A | 19 July 2019 |
| | | | | TW | 687071 | B1 | 01 March 2020 |
| | | | | US | 10594374 | B2 | 17 March 2020 |
| | | | | CN | 110036571 | B | 20 August 2021 |
| WO | 2021155610 | A1 | 12 August 2021 | | None | | |

Form PCT/ISA/210 (patent family annex) (January 2015)